# EUROPEAN PATENT APPLICATION

(11) **EP 4 579 847 A1**
(43) Date of publication of application: **02.07.2025**
(21) Application number: 24189935.0
(22) Date of filing: 22.07.2024
(51) Int. Cl.: H01M 10/0565, H01M 10/052, H01M 10/0568, H01M 10/0569, H01M 10/0587

(54) **GEL POLYMER ELECTROLYTE FOR LITHIUM BATTERY AND LITHIUM BATTERY INCLUDING THE SAME**

(30) Priority: 29.12.2023 KR 20230197670
(71) Applicant: Samsung SDI Co., Ltd, Gyeonggi-do 17084 (KR)
(72) Inventor: Bae, Woojin, 17084 Gyeonggi-do (KR); Kim, Soojin, 17084 Gyeonggi-do (KR); Kim, Seulwoo, 17084 Gyeonggi-do (KR); Moon, Jongseok, 17084 Gyeonggi-do (KR); Park, Jongseok, 17084 Gyeonggi-do (KR)
(74) Representative: Michalski Hüttermann & Partner Patentanwälte mbB

(57) **Abstract**

A gel polymer electrolyte for a lithium battery, including a gel polymer and a liquid electrolyte, and a lithium battery including the same, wherein the liquid electrolyte includes a lithium salt and an organic solvent, and the gel polymer is a crosslinked product of i) a multifunctional acrylic first polymerizable monomer including three of more polymerizable functional groups, and ii) a second polymerizable monomer selected from among urethane-acrylic monomers including two more functional groups.

## Description

### CROSS-REFERENCE TO RELATED APPLICATION

The present application claims priority to and the benefit of Korean Patent Application No. 10-2023-0197670, filed on December 29, 2023, in the Korean Intellectual Property Office, the entire content of which is incorporated herein by reference in its entirety.

### BACKGROUND

### 1. Field

Embodiments of the present disclosure described herein are related to a gel polymer electrolyte for a lithium battery and a lithium battery including the same.

### 2. Description of the Related Art

Due to safety issues of liquid electrolytes currently utilized in lithium-ion batteries or lithium metal batteries, research has been conducted on semisolid or all-solid polymer electrolytes as substitutes for liquid electrolytes.

Gel polymer electrolyte refers to a gel-type or kind semisolid electrolyte in a state of a polymer solid electrolyte including a liquid and may be manufactured in the form of a free-standing film or by a method of injecting together with an electrolytic solution and curing. Such a gel polymer electrolyte (GPE) may have improved stability although capacity may decrease due to increased resistance compared to a pure liquid electrolyte (LE).

### SUMMARY

Aspects according to one or more embodiments are directed toward a gel polymer electrolyte for a lithium battery.

Aspects according to one or more embodiments are directed toward a lithium battery having improved cell performance by including the above-described gel polymer electrolyte.

Additional aspects will be set forth in part in the description which follows and, in part, will be apparent from the description, or may be learned by practice of the presented embodiments of the present disclosure.

According to one or more embodiments, a gel polymer electrolyte for a lithium battery includes a gel polymer and a liquid electrolyte,

wherein the liquid electrolyte includes a lithium salt and an organic solvent, and the gel polymer is a crosslinked product of i) a multifunctional acrylic first polymerizable monomer including three or more polymerizable functional groups, and ii) a second polymerizable monomer selected from among urethane-acrylic monomers including two or more functional groups.

According to one or more embodiments, a lithium battery includes a positive electrode, a negative current collector, and an electrolyte layer arranged between the positive electrode and the negative current collector,

wherein the electrolyte layer includes the above-described gel polymer electrolyte.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a cross-sectional view for describing a stack structure of a lithium battery according to one or more embodiments;
FIG. 2 is a cross-sectional view for describing a stack structure of a lithium battery according to one or more embodiments;
FIG. 3 is a cross-sectional view for describing a stack structure of a lithium battery according to one or more embodiments;
FIG. 4 is a schematic diagram of a lithium battery according to one or more embodiments;
FIG. 5 is a schematic diagram of a lithium battery according to one or more embodiments;
FIG. 6A shows lifespan characteristics of lithium batteries of Examples 1 and 2 and Comparative Example 1 after 200 cycles;
FIG. 6B shows capacity variation of lithium batteries of Examples 1 and 2 and Comparative Example 1 after 200 cycles;
FIG. 7A shows ionic conductivity of gel polymer electrolytes of lithium batteries of Example 2 and Comparative Example 1 at room temperature; and
FIG. 7B shows ionic conductivity of gel polymer electrolytes of lithium batteries of Example 2 and Comparative Example 1 at a high temperature.

### DETAILED DESCRIPTION

Reference will now be made in more detail to one or more embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Accordingly, one or more embodiments are merely described in more detail, by referring to the drawings, to explain aspects of the present description. As utilized herein, the term "and/or" includes any and all combinations of one or more of the associated listed items. Expressions such as "at least one of," if preceding a list of elements, modify the entire list of elements and do not modify the individual elements of the list.

The present disclosure described in more detail herein allows one or more suitable changes and numerous embodiments, particular embodiments will be illustrated in the drawings and described in more detail in the written description. However, this is not intended to limit the present disclosure to particular modes of practice, and it is to be appreciated that all modifications, equivalents, and substitutes that do not depart from the spirit and technical scope of the present disclosure are encompassed in the present disclosure.

The terms utilized herein are merely utilized to describe particular embodiments and are not intended to limit the present disclosure. An expression utilized in the singular encompasses the expression of the plural, unless it has a clearly different meaning in the context. In the present specification, it is to be understood that the terms such as "including" or "having" and/or the like, are intended to indicate the existence of the features, numbers, operations, elements, parts, components, materials, and/or (e.g., any suitable) combination(s) thereof disclosed in the specification, and are not intended to preclude the possibility that one or more other features, numbers, operations, elements, parts, components, materials, and/or (e.g., any suitable) combination(s) thereof may exist or may be added. As utilized herein, the "/" may be interpreted as either "and" or "or" depending on situations.

As utilized herein, expressions such as "at least one of", "one of", and "of (e.g., selected from among)", when preceding a list of elements, modify the entire list of elements and do not modify the individual elements of the list. For example, "at least one of a, b or c", "at least one selected from among a, b and c", and/or the like, may indicate only a, only b, only c, both (e.g., simultaneously) a and b, both (e.g., simultaneously) a and c, both (e.g., simultaneously) b and c, all of a, b, and c, or variations thereof.

The term utilized herein is intended to describe only a specific embodiment and is not intended to limit the present disclosure. As utilized herein, the singular forms "a," "an," and "the" are intended to include the plural forms, including "at least one," unless the content (e.g., amount) clearly indicates otherwise. "At least one" should not be construed as being limited to the singular. As utilized herein, the term "and/or" includes any and all combinations of one or more of the associated listed items. The terms "includes," "including," "comprises," and/or "comprising," when utilized in the detailed description, specify a presence of stated features, regions, integers, steps, operations, elements, and/or components, but do not preclude the presence or addition of one or more other features, regions, integers, steps, operations, elements, components, and/or groups thereof.

Spatially relative terms such as "beneath," "below," "lower," "above," and "upper" may be utilized herein to easily describe one element or feature's relationship to another element or feature. It will be understood that the spatially relative terms are intended to encompass different orientations of a device in utilize or operation in addition to the orientation illustrated in the drawings. For example, when a device in the drawings is turned over, elements described as "below" or "beneath" other elements or features would then be "above" or "over" the other elements or features. In some embodiments, the example term "below" may encompass both (e.g., simultaneously) orientations of above and below. The device may be otherwise oriented (rotated 90 degrees or at other orientations), and the spatially relative terms utilized herein may be interpreted accordingly.

As utilized herein, the term "substantially" and similar terms are utilized as terms of approximation and not as terms of degree, and are intended to account for the inherent deviations in measured or calculated values that would be recognized by those of ordinary skill in the art. Also, the term "about" and similar terms, when utilized herein in connection with a numerical value or a numerical range, are inclusive of the stated value and a value within an acceptable range of deviation for the particular value as determined by one of ordinary skill in the art, considering the measurement in question and the error associated with measurement of the particular quantity (e.g., the limitations of the measurement system). For example, "about" may refer to within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

In the drawings, thicknesses of one or more suitable layers and regions may be enlarged or reduced for clarity. Throughout the specification, like reference numerals denote like elements. Throughout the specification, it will be understood that if (e.g., when) one element such as layer, film, region, or plate, is referred to as being "on" another element, it may be directly on the other element, or intervening elements may also be present therebetween. Although the terms first, second, and/or the like, may be utilized herein to describe one or more suitable components, these components should not be limited by these terms. These terms are only utilized to distinguish one component from another. In this specification and drawings, components having substantially the same functional configuration are referred to by the same reference numerals, and redundant descriptions are not provided.

Unless otherwise stated in the specification, it will be understood that if (e.g., when) one element such as layer, film, region, or plate, is referred to as being "on" another element, it may be directly on the other element, or intervening elements may also be present therebetween.

Unless otherwise stated in the specification, an expression utilized in the singular may encompass the expression of the plural. Unless otherwise stated, the term "A or B" may refer to "including A, including B, or including both (e.g., simultaneously) A and B".

As utilized herein, the term "any combination thereof' may refer to a mixture, a stack structure, a composite, a copolymer, an alloy, a blend, and a reaction product of components.

Throughout the specification, the particle diameter may be an average particle diameter, unless otherwise defined. The particle diameter may refer to an average particle diameter (D50) indicating a particle diameter corresponding to 50 % of the particles in a cumulative distribution curve. The D50 may be measured by any method well suitable in the art, for example, utilizing a particle size analyzer, or utilizing a transmission electron microscope (TEM) or a scanning electron microscope (SEM). In one or more embodiments, the D50 value may be obtained by measuring diameters of particles by dynamic light-scattering, counting the number of particles belonging to each particle diameter range via data analysis, and calculating the results. D50 may also be measured by a laser diffraction method. By the laser diffraction method, particles to be measured may be dispersed in a dispersion medium and ultrasonic waves of about 28 kHz were emitted thereto at an output of 60 W utilizing a commercially available laser diffraction particle diameter measuring device (e.g., MT 3000 manufactured by Microtrac), and then an average particle diameter (D50) may be calculated based on 50 % of the particle size distribution in the measuring device.

In the present disclosure, the "particle diameter" of particles may indicate an average diameter of spherical particles or an average length of major axes of non-spherical particles. Particle diameters of particles may be measured utilizing a particle size analyzer (PSA). The "particle diameter" of particles is, for example, an average particle diameter. The average particle diameter is, for example, a median particle diameter (D50). The median particle diameter D50 may be a particle diameter corresponding to a 50% cumulative volume calculated from the smallest particle in a particle size distribution measured, for example, by laser diffraction method. The average diameters and average lengths of major axes of particles may be measured by utilizing a scanning electron microscope (SEM). If measured by utilizing an SEM, an average value of more than 30 randomly selected particles having a diameter of 1 µm or more, excluding fine particles, is utilized.

In the present disclosure, the term "metal" may include metals and metalloids such as silicon and germanium in an elemental or ionic state, and the "alloy" may refer to a combination of two or more metals.

In the present disclosure, the term "positive active material" may refer to a material for positive electrodes allowing lithiation and delithiation, and the term "negative active material" may refer to a material for negative electrodes allowing lithiation and delithiation.

In the present disclosure, the terms "lithiation" and "lithiating" refer to a process of adding lithium to a positive active material or a negative active material, and the terms "delithiation" and "delithiating" refer to a process of removing lithium from a positive active material or a negative active material.

In the present disclosure, the terms "charging" and "charge" may refer to a process of supplying electrochemical energy to a battery, and the terms "discharging" and "discharge" may refer to a process of removing electrochemical energy from a battery.

In the present disclosure, the terms "cathode" and "positive electrode" may refer to an electrode in which electrochemical reduction and lithiation occur during discharging, and the terms "anode" and "negative electrode" may refer to an electrode in which electrochemical oxidation and delithiation occur during discharging.

The term "thickness" and "length" as utilized herein refers to an average thickness and an average length, respectively. The "thickness" and "length" measured utilizing software from a scanning electron microscope image.

Hereinafter, a gel polymer electrolyte for a lithium battery, a lithium battery including the same, and a method of manufacturing the same according to one or more embodiments will be described in more detail.

A gel polymer electrolyte for a lithium battery according to one or more embodiments may include a gel polymer and a liquid electrolyte. The liquid electrolyte may include a lithium salt and an organic solvent, and the gel polymer may be a crosslinked product of i) a multifunctional acrylic first polymerizable monomer including three of more polymerizable functional groups, and ii) a second polymerizable monomer selected from among urethane-acrylic monomers including two more functional groups.

As utilized herein, the terms "first polymerizable monomer" and "second polymerizable monomer" may be termed "first crosslinkable monomer" and "second crosslinkable monomer", respectively.

If the gel polymer electrolyte includes (e.g., is manufactured in the form of) a free standing film, a positive electrode may not be easily impregnated therewith, and thus charging and discharging characteristics may deteriorate in the event of utilizing a positive electrode having a high loading amount.

If the gel polymer electrolyte is manufactured by concurrently (e.g., simultaneously) injecting a liquid electrolyte and a crosslinking agent and curing, viscosity of a gel polymer electrolyte-forming composition may increase according to components of the crosslinking agent making it difficult to obtain sufficient impregnation of a positive electrode.

However, by appropriately or suitably adjusting viscosity of the gel polymer electrolyte-forming composition utilized to manufacture the above-described gel polymer electrolyte, the positive electrode even having a high loading amount may be easily impregnated with the gel polymer electrolyte. The gel polymer electrolyte-forming composition according to one or more embodiments may have a viscosity of about 2 cps to about 20 cps. Therefore, a composition having a viscosity within the range may be easily impregnated into a positive electrode even having a high loading amount. The gel polymer, as a crosslinked product of the first polymerizable monomer and the second polymerizable monomer as described above, may have strong lithium cation interaction and anion interaction. As a result, a lithium battery including the gel polymer electrolyte may have improved ionic conductivity, lifespan characteristics, and high-rate characteristics.

Gel polymer electrolyte refers to a gel-type or kind semisolid electrolyte in a state of a solid polymer electrolyte including a liquid and may have capacity decreased compared to pure liquid electrolyte due to increased resistance but have improved stability.

The first polymerizable monomer may be a multifunctional acrylic monomer including three or more polymerizable functional groups and may include 3 or more, for example, 3 to 6 polymerizable functional groups. As described above, the first polymerizable monomer may serve as a crosslinking agent by including an unsaturated functional group that is a polymerizable functional group participating in crosslinking reaction with the second polymerizable monomer. If the multifunctional acrylic first polymerizable monomer includes three or more polymerizable functional groups, crosslinking with the second polymerizable monomer may occur to obtain a gel polymer electrolyte having excellent or suitable physical properties.

The first polymerizable monomer may be trimethylolpropane triacrylate, trimethylolpropane trimethacrylate, trimethylolpropane ethoxylate triacrylate, trimethylolpropane propoxylate triacrylate, ditrimethylolpropane tetraacrylate, pentaerythritol triacrylate, pentaerythritol tetraacrylate, pentaerythritol ethoxylate tetraacrylate, dipentaerythritol pentaacrylate, dipentaerythritol hexaacrylate (DPHA), or any combination thereof.

The second polymerizable monomer may be a urethane-based compound including (e.g., in the form of) an oligomer capable of providing elasticity to the gel polymer and have high mechanical strength and elasticity by including an urethane moiety. As a result, if the urethane-based compound is utilized as the second polymerizable monomer for crosslinking with the first polymerizable monomer, a gel polymer electrolyte having high mechanical strength and elasticity may be manufactured.

An ester group (COO)⁻ of the first polymerizable monomer may play a role in holding Li salts and anions. By utilizing this, anions may also be induced to migrate together with lithium ions from the positive electrode to the negative electrode during initial charging. As a result, more anions may be induced to be present in the negative electrode enriching a clustered solvation structure, resulting in formation of a strong film. For example, if a fluorine-containing borate-based lithium salt is utilized as the lithium salt, a strong film including abundant boron and fluorine ions, as anions, may be formed.

The second polymerizable monomer together with the first polymerizable monomer may have strong Li+ interaction and anion interaction, and thus Li+ ions may be transferred via a polymer chain and anions may be trapped to significantly increase Li+ transference number. By introducing such a polymerizable monomer, a gel polymer electrolyte may have improved ionic conductivity and a lithium battery including the gel polymer electrolyte may have increased lifespan.

As the second polymerizable monomer, a mixture of the urethane group-containing acrylic monomer and any other monomers including a multifunctional functional group having a structure similar thereto may be utilized. As the monomers having a multifunctional functional group, for example, at least one selected from among urethane acrylate methacrylate, urethane epoxy methacrylate, and Satomer N3DE180 and N3DF230 produced by Arkema Corporation may be utilized.

The gel polymer electrolyte including a crosslinked product of the first polymerizable monomer and the second polymerizable monomer, may have very strong interaction with cations such as Li⁺ and anions such as PF₆⁻. It may be confirmed that such strong interaction is obtained from a difference in electron density distribution based on Discrete Fourier Transform (DFT) simulation.

If the urethane group-containing acrylic monomer is utilized as the polymerizable monomer, the monomer may serve as a diluent in the electrolyte and thus viscosity of the gel polymer electrolyte-forming composition may decrease. By utilizing the first polymerizable monomer and the second polymerizable monomer according to the present disclosure, processibility may be obtained by reducing viscosity of the gel polymer electrolyte composition. The gel polymer electrolyte-forming composition may have a viscosity of about 4 cps to about 10 cps. Therefore, the composition having a viscosity within the range may be easily injected into a battery assembly of the lithium battery.

In the manufacture of the gel polymer electrolyte according to one or more embodiments, in addition to the organic solvent assisting dissociation and transfer of the lithium ions, a material concurrently (e.g., simultaneously) configured to transfer Li ions and anions to the polymer chain may further be added to concentrate distribution of lithium ions in the polymer chain and a material assisting transfer in the polymer chain may be added to improve rate characteristics, thereby improving rate characteristics of the lithium battery utilizing the gel polymer electrolyte.

The gel polymer electrolyte may generally be manufactured by adding a polymerizable crosslinking agent and an initiator, which induces initiation of polymerization at a certain temperature or above, to a liquid electrolyte, and heat-treating the mixture.

Any initiators commonly available in the art may be utilized without limitation. The initiator may be, for example, benzoin ethylether, di-tertbutyl peroxide, dibenzoyl peroxide, t-tertiary butyl peroxide, azobisdiisobutyronitrile, 2,2'-azodi(isobutyronitrile), 1,1'-azodi(hexahydrobenzonitrile), 2,2'-azodi 2-methylburyronitrile), or any combination thereof.

An amount of the initiator may be about 1 part by weight to about 6 parts by weight or about 1 part by weight to about 3 parts by weight based on about 100 parts by weight of a total amount of the first polymerizable monomer and the second polymerizable monomer. By utilizing the gel polymer electrolyte prepared as described above, an ionic conductivity may be maintained at a value similar to that of a liquid electrolytic solution. The gel polymer electrolyte contained in the positive electrode and the negative electrode may inhibit or reduce leakage of the liquid electrolytic solution. The electrolytic solution may be trapped in a polymer matrix of the gel polymer electrolyte and remained in the polymer matrix to assist smooth migration of lithium ions. Due to excellent or suitable electrochemical properties of the polymer, degradation of the electrolytic solution may be inhibited or reduced in a range of about -1 V to about 5 V.

The gel polymer electrolyte may trap a liquid in a polymerized polymer matrix to form a semisolid phase. A monomer having higher affinity with lithium ions and higher affinity with anions more improves lifespan characteristics of the lithium battery after a gel polymer electrolyte is prepared. This is because lithium ions may easily migrate via a polymer chain after polymerization.

In the gel polymer electrolyte according to one or more embodiments, the gel polymer may be a crosslinked product of i) a multifunctional acrylic first polymerizable monomer including three or more polymerizable functional groups, and ii) a second polymerizable monomer selected from among urethane-acrylic monomers including two or more functional groups.

Because the COO⁻ functional group of the multifunctional acrylic first polymerizable monomer including three or more polymerizable functional groups contributes to interaction between lithium ions and anions and the first polymerizable monomer includes three of more polymerizable functional groups, crosslink density of the gel polymer formed thereof may be increased. By utilizing the gel polymer having increased crosslink density, a gel polymer electrolyte having improved physical properties may be prepared.

The second polymerizable monomer may be a compound represented by Formula 1, a compound represented by Formula 2, or any combination thereof.

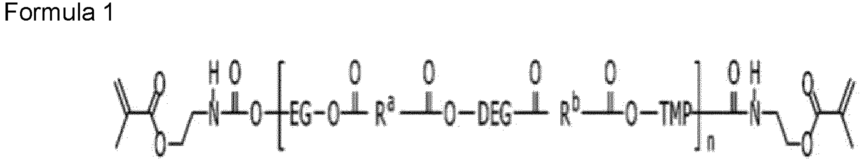

In Formula 1, R^{a} and R^{b} may be substantially identical to or different from each other and are each a substituted or unsubstituted C1-C10 alkylene group, EG may be an ethylene glycol residue, DEG may be a diethylene glycol residue, TMP may be a trimethylolpropane residue, and n may be an integer from 1 to 100.

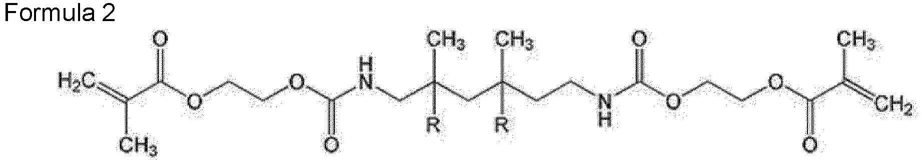

In Formula 2, each R may each independently be a hydrogen atom, a C1-C3 alkyl group, or any combination thereof.

In Formula 1, n may be an integer from 3 to 80, an integer from 5 to 50, or an integer from 5 to 30. For example, the substituted alkylene may be alkylene, at least one hydrogen of which is substituted with a C1-C3 alkyl group.

The compound represented by Formula 1 may be, for example, a compound represented by Formula 3.

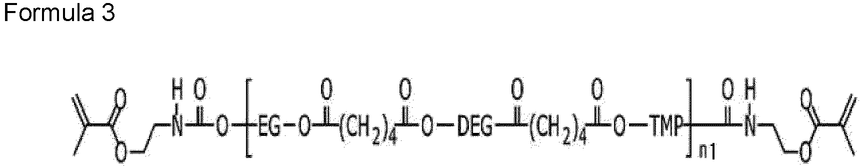

In Formula 3, n1 may be an integer from 1 to 100, EG is an ethylene glycol residue, DEG is a diethylene glycol residue, and TMP is a trimethylolpropane residue.

In Formula 3, n1 may be an integer from 3 to 80, an integer from 5 to 50, or an integer from 5 to 30.

The compounds of Formulae 1 and 3 described above may be prepared by a method disclosed in Korean Patent No. 10-1326629, and the disclosure of Korean Patent No. 10-1326629 is incorporated herein by reference.

The above-described compound of Formula 1 may have an isocyanate group at one end and a method of manufacturing the compound will be described in more detail.

A C1-C10 aliphatic dicarboxylic acid, diethylene glycol, ethylene glycol, and trimethylol propane may be mixed, a reaction catalyst may be added thereto, and the mixture may be heat-treated to prepare polyester polyol. In one or more embodiments, polyester polyol may be obtained by esterification reaction between a C1-C10 aliphatic dicarboxylic acid and alcohols, i.e., diethylene glycol, ethylene glycol, and trimethylol propane. For example, titanium isopropoxide may be utilized as the reaction catalyst.

As reaction between polyester polyol and isocyanatoethyl methacrylate progresses by adding the isocyanatoethyl methacrylate to the polyester polyol, polyurethane may be formed to prepare the compound of Formula 1 having isocyanate groups at both (e.g., opposite) ends.

The C1-C10 aliphatic dicarboxylic acid may be diadipic acid, succinic acid, sebacic acid, and/or a (e.g., any or any suitable) combination thereof.

In the reaction between polyester polyol and isocyanatoethyl methacrylate, at least one part of a hydroxyl group of the polyester polyol may react with the isocyanatoethyl methacrylate to form polyurethane. In the reaction between polyester polyol and isocyanatoethyl methacrylate, monomethyl ether hydroquinone as a polymerization inhibitor, butylated hydroxy toluene as an antioxidant, and dibutyl-tin-dilaulate as a catalyst may be added.

A weight ratio of the compound represented by Formula 1 or 3 may be in a range of about 10,000 to about 100,000. To have a weight average molecular weight within the range, the range of n and n1 may be utilized in Formulae 1 and 3, respectively. Here, a weight average molecular weight is measured by a gel permeation chromatography (GPC).

If the urethane group-containing multifunctional acrylic monomer having high mechanical strength and elasticity by including a urethane moiety constitutes a copolymer structure with a multifunctional block copolymer, a gel polymer electrolyte having high mechanical strength and elasticity may be manufactured.

A mixture of the urethane group-containing multifunctional acrylic monomer and other monomers including a multifunctional functional group and having a structure similar thereto may be utilized. As the monomers having a multifunctional functional group, for example, at least one selected from among urethane acrylate methacrylate, urethane epoxy methacrylate, and Satomer N3DE180 and N3DF230 produced by Arkema Corporation may be utilized.

A weight ratio of the first polymerizable monomer to the second polymerizable monomer may be about 10:1 to about 1:10, about 9:1 to about 1:9, about 9:1 to about 1:1, about 7:1 to about 1:1, about 5:1 to about 1:1, or about 3:1 to about 1:1. If the weight ratio of the first polymerizable monomer to the second polymerizable monomer is within the ranges described above, a lithium battery having excellent or suitable ionic conductivity and lifespan characteristics may be manufactured.

The first polymerizable monomer may have a weight average molecular weight of about 500 to about 50,000 or about 1000 to about 45,000. If the weight average molecular weight of the first polymerizable monomer is smaller than the ranges described above, a crosslink point density may be too high in a molecular structure of the polymer after crosslinking, thereby preventing or reducing free migration of the lithium salt. If the weight average molecular weight is greater than the ranges described above, the crosslink point density may be too low in the molecular structure of the polymer after crosslinking, resulting in a decrease in the ability to block or reduce an electrolytic solution.

The second polymerizable monomer according to one or more embodiments may have a weight average molecular weight of about 400 to about 100,000 or about 10,000 to about 100,000. The second polymerizable monomer according to one or more embodiments may have a weight average molecular weight of about 400 to about 40,000. If the weight average molecular weight of the second polymerizable monomer is smaller than the range described above, a crosslink point density may be too high in a molecular structure of the polymer after crosslinking, thereby preventing or reducing free migration of the lithium salt. If the weight average molecular weight is greater than the range described above, the crosslink point density may be too low in the molecular structure of the polymer after crosslinking, resulting in a decrease in the ability to block or reduce an electrolytic solution. If the weight average molecular weight of the second polymerizable monomer is within the range described above, a lithium battery having excellent or suitable ionic conductivity and lifespan characteristics may be manufactured.

The gel polymer electrolyte according to one or more embodiments may more effectively inhibit or reduce a volume change of a lithium battery during charging and discharging due to improved mechanical properties compared to the liquid electrolyte as well as excellent or suitable ionic conductivity.

Gel polymer electrolytes may effectively prevent or reduce deterioration of lithium batteries by inhibiting side reactions with a lithium metal layer during charging and discharging of the lithium battery. For example, a solid electrolyte interphase (SEI) layer may be formed between a new gel polymer electrolyte and a plated lithium metal layer during charging and discharging of the lithium battery. By modifying the SEI layer to have an increased amount of degradation products of the lithium salt, side reactions between the gel polymer electrolyte and the lithium metal layer may be more effectively inhibited or reduced. For example, the gel polymer electrolyte and/or the modified SEI layer may more effectively inhibit or reduce the growth of lithium dendrite from the lithium metal layer, thereby effectively inhibiting internal short circuit of the lithium battery.

An amount of the liquid electrolyte may be about 90 parts by weight to about 99 parts by weight or about 90 parts by weight to about 96 parts by weight based on 100 parts by weight of a total weight of the gel polymer electrolyte, and an amount of the gel polymer may be about 1 part by weight to about 10 parts by weight, about 2 parts by weight to about 10 parts by weight, about 3 parts by weight to about 10 parts by weight, or about 4 parts by weight to about 10 parts by weight based on 100 parts by weight of the total weight of the gel polymer electrolyte. If the amounts of the liquid electrolyte and the gel polymer in the gel polymer electrolyte are within the ranges described above, the gel polymer electrolyte may have improved ionic conductivity and physical properties, and a lithium battery having improved high-rate characteristics and lifespan characteristics may be prepared by utilizing the gel polymer electrolyte.

The gel polymer electrolyte according to one or more embodiments may further include at least one selected from among an ionic liquid and a polymer ionic liquid. The ionic liquid may include at least one selected from among diethylmethylammonium trifluoromethanesulfonate ([dema][TfO]), dimethylpropylammonium trifluoromethanesulfonate ([dmpa][TfO]), N,N-diethyl-N-methyl-N-(2-methoxyethyl)ammoniumbis(trifluoromethanesulfonyl)imide ([DEMA][TFSI]), N-methyl-N-propylpiperidinium bis(trifluoromethanesulfonyl)imide ([PP13][TFSI]), N-butyl-N-methyl pyrrolidium bis(trifluoromethanesulfonyl)imide ([Py14][TFSI]), and methylpropylpiperidiniumtrifluoromethanesulfonylimide ([mpp][TFSI]).

The gel polymer solid electrolyte according to one or more embodiments may further include a nitrile-based compound. The nitrile-based compound may include at least one selected from among succinonitrile (SN), adiponitrile, pimelonitrile, suberonitrile, and sebaconitrile. An amount of the nitrile-based compound may be about 1 part by weight to about 5 parts by weight based on about 100 parts by weight of the total weight of the gel polymer electrolyte. The nitrile-based compound, as a compound having a melting point of about 30 °C or above, may be a solid or solid-like substance at room temperature, may be in a solid state at room temperature (about 25 °C), and may have excellent or suitable stability and excellent or suitable ionic conductivity. The nitrile-based compound may be, for example, succinonitrile or butyronitrile.

The liquid electrolyte may include a lithium salt and a non-aqueous organic solvent.

The lithium salt may be a material dissolved in an organic solvent to serve as a source of lithium ions in a battery enabling a basic operation of the lithium secondary battery and promoting migration of lithium ions between the positive electrode and the negative electrode. Representative examples of the lithium salt may include LiPF₆, LiBF₄, LiSbF₆, LiAsF₆, LiClO₄, LiAlO₂, LiAlCl₄, LiPO₂F₂, LiCl, Lil, LiN(SO₂C₂F₅)₂, lithium bis(fluorosulfonyl)imide (Li(FSO₂)₂N, LiFSI), Li(SO₂CF₃) (LiTFSI), LiC₄F₉SO₃, LiN(CₓF₂ₓ₊₁SO₂)(C_{y}F_{2y+1}SO₂) (wherein x and y are integer from 1 to 20, respectively), lithium trifluoromethane sulfonate (LiSOsCFs), lithium pentafluoroethane sulfonate (LiSO₃C₂F₅), lithium tetrafluoroethane sulfonate (LiSO₃C₂F₄), lithium difluorobis(oxalato)phosphate (LiDFOB), lithium bis(oxalato)borate (LiBOB), or any combination thereof. (LiBOB), or any combination thereof. A concentration of the lithium salt may be, for example, about 0.01 M to about 5.0 M.

In a gel polymer electrolyte according to one or more embodiments, the lithium salt may include a first lithium salt and a second lithium salt. The gel polymer electrolyte may have improved ionic conductivity by including the first lithium salt and the second lithium salt.

The first lithium salt and the second lithium salt may be a borate-based lithium salt, respectively. The borate-based lithium salt has superior high-temperature stability to that of phosphorous-based lithium salts and may inhibit or reduce generation of hydrofluoric acid (HF). If the first lithium salt and the second lithium salt include a borate-based lithium salt, high-temperature cycle characteristics of the lithium battery may be improved.

The first lithium salt and the second lithium salt may be, for example, each independently a fluorine-containing borate-based lithium salt. A composition of an SEI layer formed during charging and discharging of the lithium battery may be modified more effectively because the first lithium salt and the second lithium salt include the fluorine-containing borate-based lithium salt. For example, as an amount of fluorine (F) of the SEI layer increases, structural stability of the SEI layer may be improved and side reactions with an organic solvent may be effectively inhibited or reduced.

The first lithium salt and the second lithium salt may be, for example, a noncyclic borate lithium salt and a cyclic borate lithium salt. If the first lithium salt is a noncyclic lithium salt, ionic conductivity of the electrolyte may be improved more effectively. If the second lithium salt is a cyclic lithium salt, aggregation of anions may increase, and thus the composition of the SEI layer may be modified more effectively and high-temperature stability of the electrolyte may be enhanced.

The fluorine-containing borate-based lithium salt may include, for example, LiBF₄, LiBF₃(C₂F₅), a compound represented by one selected from among Formulae 1-1 to 1-12, or any combination thereof.

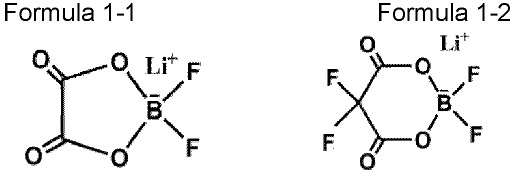

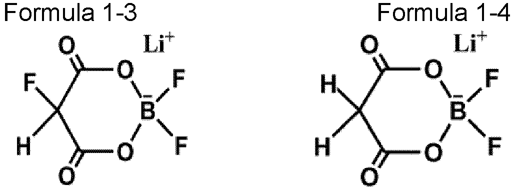

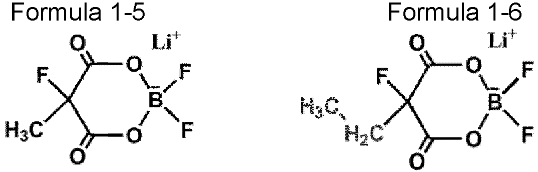

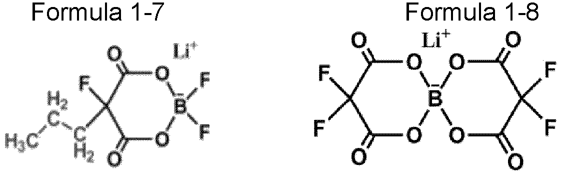

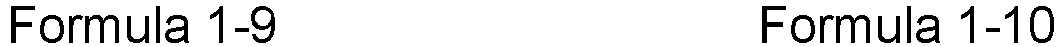

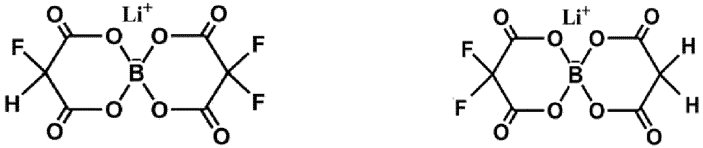

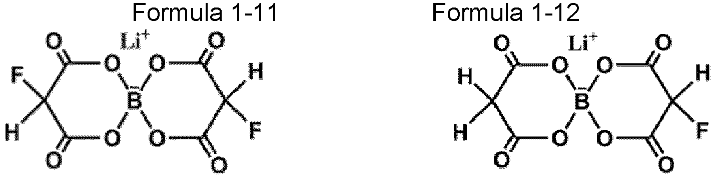

The first lithium salt may include, for example, LiBF₄, and the second lithium salt may include a compound selected from among the compounds represented by Formulae 1-1 to 1-12.

The first lithium salt may include LiBF₄, and the second lithium salt may include, for example, lithium difluoro(oxalato)borate (LiDFOB).

A content (e.g., amount) ratio of the first lithium salt to the second lithium salt may be, for example, about 1:9 to about 9:1, about 3:7 to about 7:3, or about 4:6 to about 6:4. If the content (e.g., amount) ratio of the first lithium salt to the second lithium salt is within the ranges described above, the gel polymer electrolyte may provide formation of an SEI layer having both (e.g., simultaneously) excellent or suitable ionic conductivity and structural stability. The content (e.g., amount) ratio of the first lithium salt to the second lithium salt may be, for example, a molar ratio.

According to one or more embodiments, a mixing weight ratio of lithium difluoro(oxalato)borate (LiDFOB) to lithium tetrafluoroborate (LiBF₄) may be about 1:2 to about 1:0.3 or about 1:1.5 to about 1:0.5. If the concentration of the lithium salt and the mixing weight ratio of LiDFOB to LiBF₄ are within the ranges described above, a lithium battery having improved performance may be manufactured.

A concentration of the lithium salt in the gel polymer electrolyte may be, for example, about 0.01 M to about 5.0 M, about 0.05 M to about 5.0 M, about 0.1 M to about 5.0 M, about 0.1 M to about 3 M, about 0.1 M to about 2.4 M, about 0.3 M to about 1.5 M, about 0.5 M to about 1.2 M, or about 0.8 M to about 1.2 M. If the concentration of the lithium salt is within the ranges described above, the lithium battery may have further improved characteristics.

The organic solvent may include at least one selected from among a carbonate-based compound, an ester-based compound, an ether-based compound, a nitrile-based compound, a ketone-based compound, and an alcohol-based solvent.

As the carbonate-based compound, ethyl methyl carbonate (EMC), methyl propyl carbonate (MPC), ethyl propyl carbonate (EPC), dimethyl carbonate (DMC), diethyl carbonate (DEC), dipropyl carbonate (DPC), propylene carbonate (PC), ethylene carbonate (EC), butylene carbonate (BC), and/or the like may be utilized.

As the ester-based compound, methylpropionate, ethylpropionate, ethylbutyrate, methylacetate, ethylacetate, n-propylacetate, dimethylacetate, γbutyrolactone, decanolide, γ-valerolactone, mevalonolactone, caprolactone, and/or the like may be utilized. As the ether-based compound, dibutyl ether, tetraglyme, diglyme, dimethoxyethane, 2-methyltetrahydrofuran, tetrahydrofuran, and/or the like may be utilized. As the ketone-based compound, cyclohexanone, and/or the like may be utilized. As the nitrile-based compound, acetonitrile (AN), succinonitrile (SN), adiponitrile, butyronitrile, and/or the like may be utilized.

As the ether-based compound, dibutyl ether, tetraglyme, diglyme, dimethoxyethane, 2-methyltetrahydrofuran, 2,5-dimethyltetrahydrofuran, tetrahydrofuran, or dioxolane such as 1,3-dioxolane and 1,4-dioxolane may be utilized. For example, as the ketone-based compound, cyclohexanone, and/or the like may be utilized. As the alcohol-based solvent, ethyl alcohol, isopropyl alcohol, and/or the like may be utilized. Other solvents available therefor may be nitriles such as R-CN (wherein R may be a linear, branched, or cyclic C2-C20 hydrocarbon group and may include a double bond, an aromatic ring, or an ether group); amides such as dimethylformamide, sulforanes such as ethylmethoxyethyl sulforane and ethylmethyl sulforane, and phosphates such as trimethyl phosphate.

The non-aqueous organic solvent may be utilized alone or in a combination of at least two thereof.

For example, if the carbonate-based compound is utilized, a mixture of cyclic carbonate and chain carbonate may be utilized, and the cyclic carbonate may be mixed with the chain carbonate in a volume ratio of about 1:1 to about 1:9.

Other solvents contained in the electrolyte may be dimethylsulfoxide, dimethylformamide, dimethylacetamide, tetrahydrofuran, and/or the like, but are not limited thereto, and any commonly available organic solvents may also be utilized. For example, the organic solvent may include a mixed solvent of about 50 vol% to about 95 vol% of the chain carbonate and 5 vol% to about 50 vol% of the cyclic carbonate, for example, a mixed solvent of about 70 vol% to about 95 vol% of the chain carbonate and about 5 vol% to about 30 vol% of the cyclic carbonate. For example, the organic solvent may be a mixed solvent of three or more organic solvents.

According to one or more embodiments, if the carbonate-based compound is utilized, a mixture of cyclic carbonate and chain carbonate may be utilized, and the cyclic carbonate may be mixed with the chain carbonate in a volume ratio of about 1:1 to about 1:9. According to one or more embodiments, the organic solvent may include a carbonate-based compound, and the carbonate-based compound may include fluoroethylene carbonate (FEC) and diethyl carbonate (DEC). A mixing weight ratio of FEC to DEC may be about 1:10 to about 1:1, about 1:8 to about 1:1, about 1:5 to about 1:1, or about 1:3 to about 1:1. By utilizing the organic solvent, a gel polymer electrolyte having improved ionic conductivity may be prepared. Therefore, a lithium battery having improved initial capacity and lifespan characteristics may be manufactured.

According to one or more embodiments, the electrolyte may include a nitrile-based compound, a lithium salt, and a carbonate-based compound, and the lithium salt may include lithium difluoro(dioxalato)borate (LiDFOB) and lithium tetrafluoroborate (LiBF₄).

The nitrile-based compound may be, for example, butyronitrile, valeronitrile, propionitrile, acetonitrile, or any combination thereof. For example, an amount of the nitrile-based compound may be about 3 wt% to about 45 wt% based on (100 parts by weight (e.g., 100 wt%) of) the total weight of the gel polymer electrolyte.

The gel polymer electrolyte may be a crosslinked product of the gel polymer electrolyte-forming precursor composition. The gel polymer electrolyte-forming precursor composition may include, for example, the first polymerizable monomer, the second polymerizable monomer, the lithium salt, and the organic solvent. By crosslinking the gel polymer electrolyte-forming precursor composition, a gel polymer electrolyte may be obtained. By crosslinking the first polymerizable monomer and the second polymerizable monomer, a first polymer including repeating units derived from the first polymerizable monomer and the second polymerizable monomer may be obtained. The amounts of the first polymerizable monomer and the second polymerizable monomer may be, for example, about 0.1 wt% to about 10 wt%, about 0.2 wt% to about 8 wt%, about 0.5 wt% to about 6 wt%, about 1 wt% to about 5 wt%, or about 2 wt% to about 4 wt% based on (100 wt% of) a total weight of the gel polymer electrolyte-forming precursor composition. If the amount of the first crosslinkable monomer is within the range of the gel polymer electrolyte-forming precursor composition, a stable gel polymer electrolyte may be formed. If the amounts of the first polymerizable monomer and the second polymerizable monomer are too low, it may be difficult to form a gel. If the amounts of the first polymerizable monomer and the second polymerizable monomer are too high, the gel polymer electrolyte may be excessively (or substantially) cured causing cracks in the gel polymer electrolyte during a charging and discharging process.

A method of crosslinking the gel polymer electrolyte-forming precursor composition is not limited, but the precursor composition may be crosslinked, for example, by heat, ultraviolet rays, and/or the like. In terms of manufacturing efficiency, thermal crosslinking may be utilized. The gel polymer electrolyte-forming precursor composition may include, for example, a thermal initiator. The thermal initiator may be, for example, t-amylperoxide or azobis-based compounds, but the present disclosure is not limited thereto, and any compounds commonly utilized as a thermal initiator may also be utilized. An amount of the thermal initiator may be about 0.1 wt% or less or about 0.05 wt% or less based on (100 wt% of) the total weight of the gel polymer electrolyte-forming precursor composition. The crosslinked product of the gel polymer electrolyte-forming precursor composition may be, for example, a product obtained after heat treatment at about 60 °C to about 90 °C for about 1 hour to about 3 hours. Heat treatment conditions may be adjusted according to the type or kind of thermal initiator utilized therefor.

The gel polymer electrolyte may be present in the separator and in an interface between the separator and the positive electrode. The gel polymer electrolyte may be partially included in the positive electrode.

The gel polymer electrolyte-containing separator may be separately prepared including (e.g., in the form of) a self-standing film, and a lithium battery may be prepared by disposing the gel polymer electrolyte-containing separator on the negative current collector and a protective layer and disposing a positive electrode thereon. In one or more embodiments, the protective layer may not be provided.

For example, a lithium battery including a gel polymer electrolyte-containing separator may be manufactured by preparing a battery assembly by locating a negative current collector and a protective layer and disposing a separator and a positive electrode thereon, injecting the gel polymer electrolyte-forming composition into the battery assembly, and performing heat treatment.

In one or more embodiments, provided is a lithium battery including a positive electrode, a negative current collector, and an electrolyte layer arranged between the positive electrode and the negative current collector, wherein the electrolyte layer includes the above-described gel polymer electrolyte.

The gel polymer electrolyte may have an ionic conductivity of about 0.44 mS/cm or more at about 25 °C at about 1 atm and an ionic conductivity of about 0.63 mS/cm or more at about 45 °C at about 1 atm. By utilizing the gel polymer electrolyte having the ionic conductivity, a lithium battery having improved cycle characteristics may be provided.

The lithium battery may further include a separator on the negative current collector. The separator may include the gel polymer electrolyte.

The lithium battery may have a structure including: a positive electrode; a negative current collector; a separator arranged between the positive electrode and the negative current collector; and a gel polymer electrolyte arranged on the separator. The gel polymer electrolyte may be arranged between the separator and the positive electrode.

The lithium battery may include a negative active material layer or a protective layer arranged between the negative current collector and the separator or may be free from the negative active material layer or the protective layer.

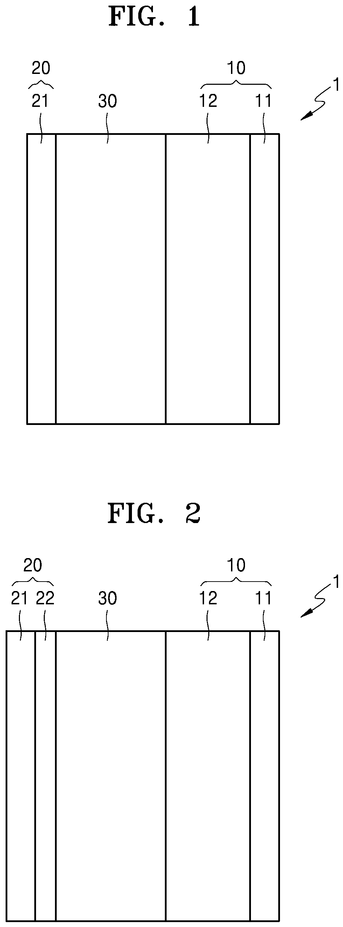

FIG. 1 is a view illustrating a stack structure of a lithium battery according to one or more embodiments. The lithium battery may be, for example, a lithium metal battery.

The lithium battery 1 may include a negative electrode 20 including a negative current collector 21, and the negative electrode 20 may include a structure including the negative current collector 21 and an electrolyte layer 30 arranged between the negative current collector 21 and a positive electrode 10. The negative electrode 20 is free from a negative active material layer. In one or more embodiments, a protective layer may be formed on the negative current collector 21.

The electrolyte layer 30 may include a gel polymer electrolyte. The electrolyte layer 30 may further include a separator. The separator may include a porous substrate or include the porous substrate and a coating layer formed thereon.

The positive electrode 10 may include a positive active material layer 12 and a positive current collector 11. The separator 30 may include a gel polymer electrolyte.

If the electrolyte layer includes a porous substrate, the gel polymer electrolyte may be arranged between the porous substrate and the positive electrode._ The porous substrate may include the gel polymer electrolyte.

In one or more embodiments, the positive electrode 10 may include the gel polymer electrolyte.

As shown in FIG. 2, a lithium metal layer 22 may further be arranged between the negative current collector 21 and the electrolyte layer 30. The lithium metal layer may correspond to a negative active material layer. The lithium metal layer may include lithium metal or lithium alloy.

The protective layer may be arranged between the lithium metal layer and the electrolyte layer. The protective layer may be a lithium ion conductive buffer layer and may prevent or reduce the gel polymer electrolyte-containing separator as the electrolyte layer from being in contact with the lithium metal layer. The protective layer may inhibit or reduce formation and growth of lithium dendrite on the negative current collector.

The lithium metal layer may be arranged while a battery is assembled.

A binder of the protective layer may be a vinylidenefluoride-hexafluoropropylene (VDF-HFP) copolymer, polyethylene oxide, polypropylene oxide, polydimethylsiloxane, polyacrylonitrile, polymethyl(meth)acrylate, polyvinylchloride, polyvinylidene fluoride, polyvinylidene fluoride-co-hexafluoro propylene, polyethyleneimine, polyphenylene terephthalamide, polymethoxypolyethyleneglycol(meth)acrylate, poly 2-methoxy ethylglycidylether, or any combination thereof.

The binder of the protective layer may include a crosslinked polymer of a first polymer and a second polymer that is a crosslinked product of the first polymer including a hydroxyl group and the second polymer including a crosslinkable functional group.

A weight ratio of the first polymer to the second polymer may be about 50:50 to about 99:1, and the second polymer may include at least one selected from among a fluorine-containing polyamic acid having a carboxyl group and a fluorine-containing polyimide.

The protective layer is dense. As density and strength thereof increase, lithium ions freely migrate and lithium ion transfer is improved, thereby improving lithium plating characteristics. As a result, ionic conductivity may be improved, resulting in improvement in high-rate characteristics of the lithium battery. By disposing the above-described protective layer on the negative active material layer, side reactions between the negative active material layer and the electrolyte may be effectively prevented or reduced and inhibited or reduced.

The protective layer may further include an inorganic material. The inorganic material may include at least one selected from among silica (SiO₂), alumina (Al₂O₃), titaniumoxide (TiO₂), lithiumtitaniumoxide (LiTiO₂), bariumtitaniumoxide (BaTiO₂), lithium alumina (LiAlO₂), and zeolite or any mixture thereof.

If the protective layer according to one or more embodiments is present on the surface of a negative active material layer including lithium metal, formation and/or growth of lithium dendrite may be effectively prevented or reduced on the negative current collector. A negative electrode including the above-described protective layer and a lithium battery including the same may have improved cycle characteristics and stability.

The hydroxyl group-containing first polymer may be a polymerization product of at least one monomer selected from among carboxymethylcellulose (CMC); polyvinylalcohol (PVA); vinylacetate, butyl (meth)acrylate, 2-hydroxyethyl (meth)acrylate, 2-hydroxypropyl (meth)acrylate, 4-hydroxybutyl (meth)acrylate, 6-hydroxyhexyl (meth) acrylate, 8-hydroxyoctyl (meth)acrylate, 2-hydroxyethyleneglycol (meth)acrylate, 2-hydroxypropyleneglycol (meth)acrylate, acrylic acid, methacrylic acid, 2-(meth)acryloyloxy acetic acid, 3-(meth)acryloyloxy propyl acid, 4-(meth)acryloyloxy butyl acid, itaconic acid, maleic acid, 2-isocyanatoethyl (meth)acrylate, 3-isocyanatopropyl (meth)acrylate, 4-isocyanatobutyl (meth)acrylate, (meth)acrylamide, ethylenedi(meth)acrylate, diethyleneglycol(meth)acrylate, triethyleneglycoldi(meth)acrylate, trimethylenepropanetri(meth)acrylate, trimethylenepropanetriacrylate, 1,3-butandiol(meth)acrylate, 1,6-hexanedioldi(meth)acrylate, allylacrylate, and N-vinyl caprolactam, or a hydrolysate thereof.

The first polymer may be polyvinyl alcohol (PVA). For example, the polyvinylalcohol may be a hydrolysate obtained by hydrolyzing polyvinyl acetate with alkaline.

Polyvinylalcohol may have a saponification degree of about 60 % to about 99 %, about 70 % to about 95 %, about 75 % to about 90 %, or about 80 % to about 90 %. For example, the polyvinylalcohol may have a saponification degree of about 85 % to about 90 %.

Within the above-described ranges of the saponification degree, the protective layer may have further improved physical properties.

The first polymer may have a weight average molecular weight of about 10,000 Da to about 500,000 Da, about 10,000 Da to about 500,000 Da, about 10,000 Da to about 400,000 Da, about 10,000 Da to about 300,000 Da, about 10,000 Da to about 200,000 Da, about 50,000 Da to about 150,000 Da, about 70,000 Da to about 100,000 Da, or about 80,000 Da to about 100,000 Da. If the first polymer has a weight average molecular weight within the above-described ranges, physical properties of the protective layer may further be improved.

The protective layer may further include the hydroxyl group-containing first polymer and the crosslinkable functional group-containing second polymer. The protective layer may further include a crosslinked polymer of the first polymer and the second polymer.

The second polymer may include at least one selected from among a fluorine-containing polyamic acid having a carboxyl group and a fluorine-containing polyimide.

The polyamic acid may be represented by Formula 4 or 5, and the polyimide may be represented by Formula 6 or 7 .

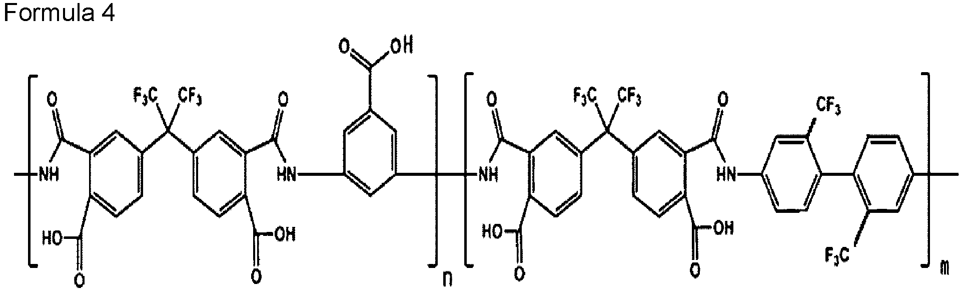

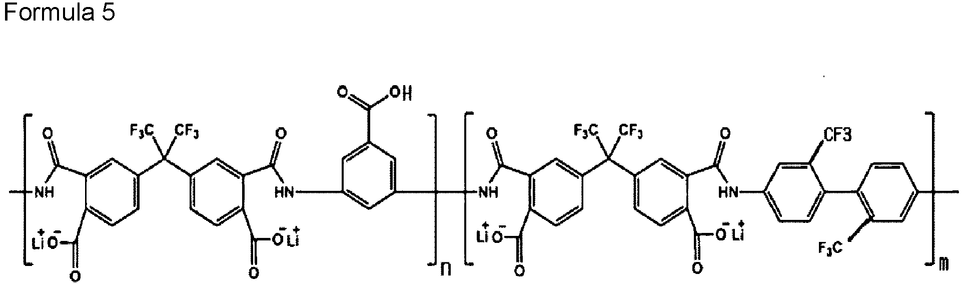

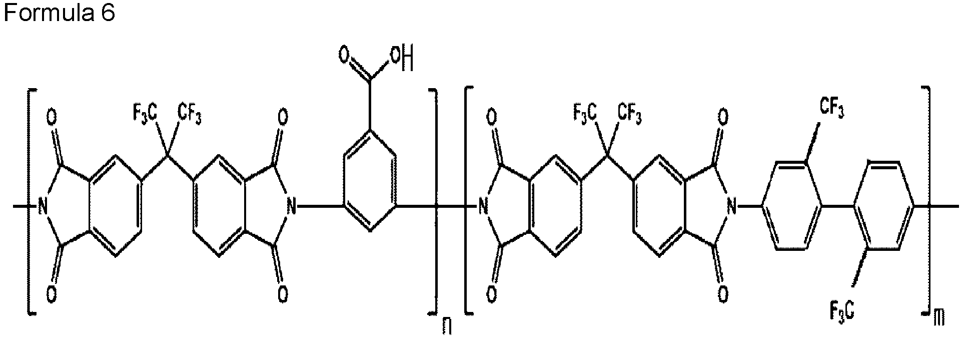

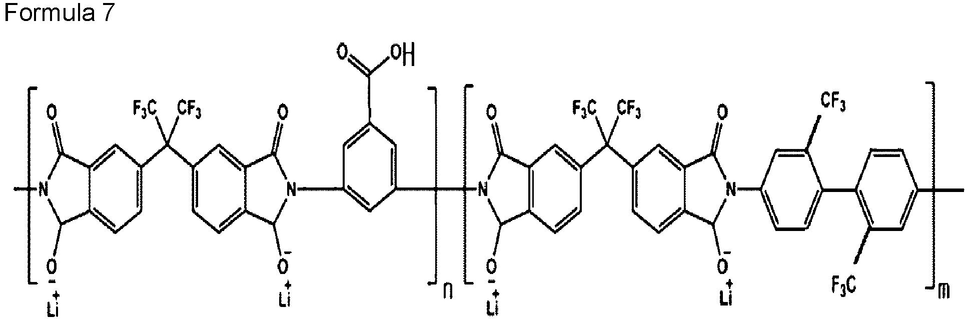

In Formulae 4 to 7, n and m are mole fractions of repeating units, respectively, satisfying 0<n≤1, 0≤m<1, and n+m=1.

For example, in the second polymer, the mole fractions of the crosslinking group-containing repeating unit and the crosslinking group-free repeating unit may satisfy 0<n≤0.5, 0.5≤m<1, and n+m=1, respectively. For example, in the second polymer, the mole fractions of the crosslinking group-containing repeating unit and the crosslinking group-free repeating unit may satisfy 0.1≤n≤0.4, 0.6≤m≤0.9, and n+m=1, respectively. For example, in the second polymer, the mole fractions of the crosslinking group-containing repeating unit and the crosslinking group-free repeating unit may satisfy 0.15≤n≤0.35, 0.65≤m≤0.85, and n+m=1, respectively. For example, in the second polymer, the mole fractions of the crosslinking group-containing repeating unit and the crosslinking group-free repeating unit may satisfy 0.2≤n≤0.3, 0.7≤m≤0.8, and n+m=1, respectively. Within the mole fraction ranges, more improved physical properties may be provided.

For example, the second polymer may be a random copolymer. For example, the second polymer may be a block copolymer.

The second polymer may have a weight average molecular weight of about 10,000 Da to about 1,200,000 Da, about 10,000 Da to about 1,100,000 Da, about 10,000 Da to about 1,000,000 Da, about 10,000 Da to about 500,000 Da, about 100,000 Da to about 500,000 Da, about 100,000 Da to about 400,000 Da, for example, about 100,000 Da to about 300,000 Da. If the second polymer has a weight average molecular weight within the above-described ranges, physical properties of the protective layer may further be improved.

In the protective layer, a weight ratio of the hydroxyl group-containing first polymer to the second polymer included in a third polymer may be about 99:1 to about 50:50, about 95:5 to about 55:45, about 95:5 to about 60:40, about 95:5 to about 65:35, or about 90:10 to about 70:30. If the weight ratio of the first polymer to the second polymer is within the ranges described above, physical properties by the protective layer may further be improved.

A hydroxyl group of the first polymer may react with a carboxyl group of the second polymer to form an ester bond, thereby forming the third polymer as a crosslinked product of the first polymer and the second polymer. By forming the third polymer, stability of the protective layer may be improved and interfacial stability may be improved by reducing formation of irreversible lithium-containing materials in the case of a halogen group such as a fluorine functional group.

The protective layer according to one or more embodiments may include a crosslinked polymer of polyvinylalcohol and polyamic acid. The polyamic acid may be, for example, a polymer represented by Formula 4 or 5.

According to one or more embodiments, the crosslinked polymer of the protective layer may be a crosslinked polymer of polyvinylalcohol and fluorinated polyimide (PVA/ PI-f). The fluorinated polyimide may be a polymer represented by Formula 6 or 7 described above.

The protective layer may include a binder including a polar functional group and may be free from a lithium salt.

The protective layer may further include a lithium salt. By including the lithium salt, the protective layer may have excellent or suitable ionic conductivity. The lithium salt may include, for example, at least one selected from among LiSCN, LiN(CN)₂, LiClO₄, LiBF₄, LiAsF₆, LiPF₆, LiCF₃SO₃, LiC(CF₃SO₂)₃, LiC(FSO₂)₃, LiN(SO₂C₂F₅)₂, LiN(SO₂CF₃)₂, LiN(SO₂F)₂, LiSbF₆, LiPF₃(CF₂CF₃)₃, LiPF₃(CF₃)₃, and LiB(C₂O₄)₂.

In the negative electrode according to one or more embodiments, the lithium metal layer may include lithium metal foil, lithium metal powder, lithium alloy foil, lithium alloy powder, or any combination thereof, and the lithium alloy may include lithium and a first metal.

Lithium metal of the lithium metal foil and lithium metal powder may include, for example, lithium metal foil, lithium alloy foil, or any combination thereof. The lithium alloy may include lithium and a first metal, and the first metal may be indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), palladium (Pd), magnesium (Mg), silver (Ag), zinc (Zn), nickel, iron, cobalt, chromium, cesium, sodium, potassium, calcium, yttrium, tantalum, hafnium, barium, vanadium, strontium, lanthanum, or any combination thereof.

The lithium alloy may be an alloy of lithium and a metal alloyable with lithium, for example, lithium-silver alloy, lithium-zinc alloy, lithium-magnesium alloy, or lithium-tin alloy. The negative active material layer including the lithium metal foil may be, for example, a lithium metal layer. The negative active material layer including the lithium alloy foil may be, for example, a lithium alloy layer. The negative active material layer including lithium metal powder and/or lithium alloy powder may be introduced onto the negative current collector by applying a slurry including lithium powder and a binder thereto. The binder may be a fluorine-based binder, such as polyvinylidene fluoride (PVDF). The negative active material layer may not include (e.g., may exclude) a carbonaceous negative active material. Therefore, the negative active material layer may be formed of a metallic negative active material.

A thickness of the lithium metal layer may be, for example, about 1 µm to about 50 µm, about 1 µm to about 30 µm, about 10 µm to about 30 µm, or about 10 µm to about 80 µm. If the lithium metal layer has a thickness within the ranges described above, cycle characteristics and lifespan characteristics of the lithium battery may further be improved.

The thickness of the lithium metal layer 23 may be, for example, smaller than that of the electrolyte layer 30. The thickness of the lithium metal layer 23 may be, for example, about 70 % or less, about 60 % or less, about 50 % or less, about 40 % or less, or about 30 % or less of the thickness of the electrolyte layer 30. The thickness of the lithium metal layer 23 may be, for example, about 1% to about 70 %, about 1 % to about 60 %, about 1 % to about 50 %, about 1 % to about 40 %, or about 1 % to about 30 % of the thickness of the electrolyte layer 30. A volume change of the lithium battery 1 may be inhibited or reduced during charging and discharging because the thickness of the lithium metal layer 23 is smaller than that of the electrolyte layer 30. As a result, deterioration caused by a volume change of the lithium battery 1 may be inhibited or reduced.

The thickness of the lithium metal layer 23 may be, for example, smaller than that of the positive active material layer 12. The thickness of the lithium metal layer 23 may be, for example, about 70 % or less, about 60 % or less, about 50 % or less, about 40 % or less, or about 30 % or less of the thickness of the positive active material layer 12. The thickness of the lithium metal layer 23 may be, for example, about 1 % to about 70 %, about 1 % to about 60 %, about 1 % to about 50 %, about 1 % to about 40 %, or about 1 % to about 30 % of the thickness of the positive active material layer 12. A volume change of the lithium battery 1 may be inhibited or reduced during charging and discharging because the thickness of the lithium metal layer 23 is smaller than that of the positive active material layer 12. As a result, deterioration caused by a volume change of the lithium battery 1 may be inhibited or reduced.

In an XPS analysis of the surface of the lithium metal layer 23, for example, a peak intensity derived from fluorine (F) may be greater than a peak intensity derived from oxygen (O). In the XPS analysis of the surface of the lithium metal layer 23, for example, the peak intensity derived from fluorine (F) may be more than about 100 %, about 105 % or more, about 110 % or more, or about 120 % or more of the peak intensity derived from oxygen (O). In the XPS analysis of the surface of the lithium metal layer 23, for example, the peak intensity derived from fluorine (F) may be more than about 100 % but not more than about 200 %, from about 105 % to about 200 %, from about 110 % to about 200 %, or from about 120 % to about 200 % of the peak intensity derived from oxygen (O). Structural stability of the SEI layer may be improved because the SEI layer formed on the lithium metal layer 23 mainly includes an inorganic compound containing fluorine (F). As a result, cycle characteristics of the lithium battery 1 may be improved. In one or more embodiments, if the SEI layer formed on the surface of the lithium metal layer 23 mainly includes an organic compound containing oxygen (O), structural stability of the SEI layer may deteriorate. The peak derived from fluorine (F) may be, for example, a peak derived from 1s orbital of fluorine (F). The peak derived from oxygen (O) may be, for example, a peak derived from 1s orbital of oxygen (O).

The lithium metal layer 23 may be plated by charging after assembling the lithium battery 1, and the lithium metal layer 23 may not be included while the lithium battery 1 is assembled, and thus energy density of the lithium battery 1 may increase. For example, if the lithium metal layer 23 is additionally arranged by charging after assembling the lithium battery 1, a region between the negative electrode 20, i.e., the negative current collector 21, and the electrolyte layer 30, may be a Li-free region not including lithium (Li) in the early stage of charging or after completely discharging the lithium battery 1.

A particle diameter of lithium powder may be, for example, from about 0.1 µm to about 3 µm, from about 0.1 µm to about 2 µm, from about 0.1 µm to about 2 µm. If the lithium powder has a thickness within the ranges described above, lifespan characteristics of the lithium battery may further be improved.

The negative electrode may further include a negative active material layer.

The negative active material layer may include: a carbonaceous material; a mixture of a carbonaceous material and at least one of the first metal; a composite of a carbonaceous material and at least one of the first metal; or any combination thereof, wherein the carbonaceous material includes amorphous carbon having an average particle diameter of about 10 nm to about 100 nm. The carbonaceous material may include carbon black, carbon nanotube, carbon nanofiber, fullerene, activated carbon, carbon fiber, or any combination thereof.

The first metal may be indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), palladium (Pd), magnesium (Mg), silver (Ag), zinc (Zn), nickel, iron, cobalt, chromium, cesium, sodium, potassium, calcium, yttrium, tantalum, hafnium, barium, vanadium, strontium, lanthanum, or any combination thereof.

A lithium metal layer may further be arranged between the negative current collector and one side of the protective layer.

The lithium metal layer may further be arranged on the other side of the protective layer opposite to the one side.

The protective layer may have a thickness of about 1 µm to about 10 µm, about 2 µm to about 8 µm, or about 3 µm to about 5 µm.

If the thickness of the protective layer is within the ranges described above, internal resistance may increase and energy density, high-rate characteristics, and lifespan characteristics may be improved without a decrease in energy density of the lithium battery.

In the lithium battery according to one or more embodiments, the electrolyte layer may further include an electrolyte. The electrolyte may be a liquid electrolyte, a solid electrolyte, a gel electrolyte, or any combination thereof.

The solid electrolyte may include an oxide-based solid electrolyte, a sulfide-based solid electrolyte, a polymer solid electrolyte, or any combination thereof. The gel electrolyte may have a gel state without including a polymer.

The gel electrolyte may include a polymer gel electrolyte. The positive electrode may include a positive current collector and a positive active material layer, and at least one selected from among the positive current collector and the negative current collector may include a base film and a metal layer arranged on a side (e.g., one side or both sides (e.g., opposite sides)) of the base film. The base film may include a polymer and the polymer may include polyethyleneterephthalate (PET), polyethylene (PE), polypropylene (PP), polybutyleneterephthalate (PBT), polyimide (PI), or any combination thereof.

The metal layer may include indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

A thickness of the negative active material layer may be, for example, from about 0.1 µm to about 500 µm, from about 1 µm to about 500 µm, or from about 10 µm to about 500 µm, but the present disclosure is not limited thereto and may be adjusted according to desired or required shape, capacity, and/or the like of the lithium battery. If the thickness of the negative active material layer is within the ranges described above, cycle characteristics of the lithium battery may be improved without a decrease in energy density.

The lithium battery according to one or more embodiments may not include (e.g., may exclude) a negative active material layer arranged between the negative current collector 21 and the protective layer. In the negative electrode free from the negative active material layer, lithium metal may be plated between the negative current collector 21 and the protective layer by charging after the positive electrode and the electrolyte are introduced into the lithium battery. As a result, the negative electrode 20 may include the negative active material layer. The negative active material layer may be a plated lithium layer.

The lithium battery may further include a separator.

In general, the separator may have a pore diameter of about 0.01 µm to about 10 µm and a thickness of about 5 µm to about 20 µm. As the separator, for example, an olefin-based polymer such as polypropylene; or a sheet or non-woven fabric formed of glass fiber or polyethylene may be utilized. If a solid polymer electrolyte is utilized as the electrolyte, the solid polymer electrolyte may also serve as the separator.

Examples of the olefin-based polymer among the separators may include polyethylene, polypropylene, or a multilayered film having two or more layers thereof. A mixed multilayered film such as a polyethylene/polypropylene double-layered separator, a polyethylene/polypropylene/polyethylene triple-layered separator, a polypropylene/polyethylene/polypropylene triple-layered separator may be utilized.

In the lithium battery according to one or more embodiments, the liquid electrolyte may include a lithium salt and an organic solvent.

The organic solvent may be, for example, an aprotic organic solvent such as N-methyl-2-pyrrolidone, propylene carbonate, ethylene carbonate, butylene carbonate, dimethyl carbonate, diethyl carbonate, gamma-butyro lactone, 1,2-dimethoxy ethane, tetrahydroxyfranc, 2-methyl tetrahydrofuran, dimethylsulfoxide, 1,3-dioxolane, formamide, dimethylformamide, dioxorane, acetonitrile, nitromethane, methyl formate, methyl acetate, phosphoric acid triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate. Among them, a carbonate-based solvent such as propylene carbonate, ethylene carbonate, butylene carbonate, dimethyl carbonate, and diethyl carbonate may be utilized.

The lithium salt may be any lithium salts commonly utilized in lithium secondary batteries, and as a substance easily dissolved in the non-aqueous solvent, for example, at least one selected from among LiSCN, LiN(CN)₂, LiClO₄, LiBF₄, LiAsF₆, LiPF₆, LiCF₃SO₃, LiC(CF₃SO₂)₃, LiC(FSO₂)₃, LiN(SO₂C₂F₅)₂, LiN(SO₂CF₃)₂, LiN(SO₂F)₂, LiSbF₆, LiPF₃(CF₂CF₃)₃, LiPF₃(CF₃)₃, and LiB(C₂O₄)₂, may be utilized.

The lithium salt may have a concentration of, for example, about 1 M to about 5 M, for example, about 1 M to about 2.5 M, in the liquid electrolyte. Within the above-described concentration ranges, lithium ions may be generated in an amount sufficient for charging and discharging of the lithium battery.

If the gel polymer electrolyte is present in pores of the porous substrate, interfacial resistance among the positive electrode, the negative electrode, and the separator may be minimized or reduced, thereby facilitating migration of lithium.

According to one or more embodiments, the negative active material layer may be located while the lithium battery is assembled. According to one or more embodiments, lithium metal may be plated after charging, and thus the negative active material layer may be included therein. The negative active material layer may be a plated lithium layer.

The negative active material layer may include lithium metal or lithium alloy.

If the negative active material layer is located while the battery is assembled, the negative active material may include a carbonaceous material alone or at least one selected from among a carbonaceous material, a metal, and a metalloid.

The carbonaceous material may include amorphous carbon having an average particle diameter of about 10 nm to about 100 nm. The carbonaceous material may include carbon black (CB), acetylene black (AB), furnace black (FB), Ketjen black (KB), graphene, or any combination thereof.

The negative active material layer may be lithium metal foil, lithium metal powder, lithium alloy foil, lithium alloy powder, or any combination thereof, and the lithium alloy may include lithium and a first metal.

The first metal may be indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), palladium (Pd), magnesium (Mg), silver (Ag), zinc (Zn), nickel, iron, cobalt, chromium, cesium, sodium, potassium, calcium, yttrium, tantalum, hafnium, barium, vanadium, strontium, lanthanum, or any combination thereof.

The negative active material layer 22 may include, for example, lithium foil, lithium powder, or any combination thereof. The lithium foil may include, for example, lithium metal foil, lithium alloy foil, or any combination thereof. The lithium powder may include lithium metal powder, lithium alloy powder or any combination thereof. The lithium alloy is an alloy of lithium and a metal alloyable with lithium, for example, lithium-silver alloy, lithium-zinc alloy, lithium-magnesium alloy, or lithium-tin alloy. The negative active material layer including the lithium metal foil may be, for example, a lithium metal layer. The negative active material layer including the lithium alloy foil may be, for example, a lithium alloy layer. The negative active material layer including lithium metal powder and/or lithium alloy powder may be introduced onto the negative current collector by applying a slurry including lithium powder and a binder thereto. The binder may be a fluorine-based binder, such as polyvinylidene fluoride (PVDF). The negative active material layer may not include (e.g., may exclude) a carbonaceous negative active material. Therefore, the negative active material layer may be formed of a metallic negative active material.

The negative current collector may be formed of, for example, a material that does not react with lithium, i.e., a material that does not form an alloy and compound with lithium. The material constituting the negative current collector may be, for example, copper (Cu), stainless steel, titanium (Ti), iron (Fe), cobalt (Co), and nickel (Ni), but the present disclosure is not limited thereto, and any materials commonly available in the art as electrode current collectors may also be utilized. The negative current collector may be formed of one metal selected from among those described above or an alloy or coating material of two or more metals selected therefrom. The negative current collector may include, for example, (e.g., may be in the form of) a plate or foil.

In one or more embodiments of the present disclosure, the positive current collector may include, for example, (e.g., may be in the form of) a plate or foil formed of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The positive current collector may have a thickness of, for example, about 1 µm to about 100 µm, about 1 µm to about 50 µm, about 5 µm to about 25 µm, or about 10 µm to about 20 µm.

The negative active material layer may include a negative active material and a binder.

The negative active material may include, for example, (e.g., may be in the form of) particles. The negative active material includes (e.g., in the form of) particles that may have an average particle diameter of, for example, about 10 nm to about 4 µm, about 10 nm to about 1 µm, about 10 nm to about 500 nm, about 10 nm to about 100 nm, or about 20 nm to about 80 nm. If the average particle diameter of the negative active material is within the ranges described above, reversible plating and/or dissolution of lithium may occur more easily during a charge/discharge process. The average particle diameter of the negative active material may be, for example, a median diameter D50 measured utilizing a laser particle size analyzer.

The negative active material may include, for example, at least one of a carbonaceous negative active material and a metal or metalloid negative active material. The carbonaceous negative active material may be, for example, amorphous carbon. The carbonaceous negative active material may be, for example, carbon black (CB), acetylene black (AB), furnace black (FB), Ketjen black (KB), and graphene, but the present disclosure is not limited thereto and any carbonaceous materials classified as amorphous carbon may also be utilized. Amorphous carbon may be carbon that does not have crystallinity or has relatively low crystallinity and may be distinguished from crystalline carbon or graphite-based carbon. The metal or metalloid negative active material may include at least one selected from among gold (Au), platinum (Pt), palladium (Pd), silicon (Si), silver (Ag), aluminum (Al), bismuth (Bi), tin (Sn), and zinc (Zn), but the present disclosure is not limited thereto, and any suitable metal or metalloid negative active materials that form an alloy or compound with lithium may also be utilized. For example, nickel (Ni) does not form an alloy with lithium, and thus Ni is not a metal negative active material. The negative active material layer may include one of these negative active materials and/or a (e.g., any suitable) mixture of a plurality of different negative active materials. The negative active material layer may include, for example, a mixture of amorphous carbon and at least one selected from among gold (Au), platinum (Pt), palladium (Pd), silicon (Si), silver (Ag), aluminum (Al), bismuth (Bi), tin (Sn), and zinc (Zn). A mixing ratio of the mixture may be, for example, from about 10:1 to about 1:2, from about 10:1 to about 1:1, from about 7:1 to about 1:1, from about 5:1 to about 1:1, or from about 4:1 to about 2:1. For example, the negative active material included in the negative active material layer may include a mixture of first particles formed of amorphous carbon and second particles formed of a metal or metalloid. The metal may include, for example, gold (Au), platinum (Pt), palladium (Pd), silicon (Si), silver (Ag), aluminum (Al), bismuth (Bi), tin (Sn), and zinc (Zn). An amount of the second particles may be from about 8 wt% to about 60 wt%, from about 10 wt% to about 50 wt%, from about 15 wt% to about 40 wt%, or from about 20 wt% to about 30 wt% based on (100 wt% of) a total weight of the mixture. If the amount of the second particles is within the ranges described above, cycle characteristics of the lithium battery may further be improved.

The binder included in the negative active material layer may be, for example, styrene butadiene rubber (SBR), polytetrafluoroethylene, polyvinylidene fluoride, polyethylene, a vinylidene fluoride/hexafluoropropylene copolymer, polyacrylonitrile, or polymethylmethacrylate, but the present disclosure is not limited thereto, and any binders commonly available in the art may also be utilized. The binder may be utilized alone or in a combination of a plurality of different binders. If the negative active material layer does not include a binder, the negative active material layer may be easily separated from a ceramic coating layer 25 or the negative current collector 21. An amount of the binder included in the negative active material layer may be, for example, from about 1 wt% to about 20 wt% based on (100 wt% of) a total weight of the negative active material layer.

The thickness of the negative active material layer may be, for example, from about 0.1 µm to about 500 µm, or from about 100 µm to about 500 µm. The thickness of the negative active material layer may be, for example, from about 1 % to about 50 %, from about 1 % to about 30 %, from about 1 % to about 10 %, or from about 1 % to about 5 % based on a thickness of the positive active material layer. If the negative active material layer is too thin, lithium dendrite formed between the negative active material layer and the negative current collector may disintegrate the negative active material layer making it difficult to improve cycle characteristics of the lithium battery. If the negative active material layer is too thick, energy density of the lithium battery including the negative electrode 20 may decrease, making it difficult to improve cycle characteristics of thereof.

As the thickness of the negative active material layer decreases, for example, a charging capacity of the negative active material layer may also decrease. The charging capacity of the negative active material layer may be, for example, from about 0.1 % to about 50 %, from about 1 % to about 30 %, from about 1 % to about 10 %, from about 1 % to about 5 %, or from about 1 % to about 2 % based on a total charging capacity. If the charging capacity of the negative active material layer is too low, lithium dendrite formed between the negative active material layer and the negative current collector may disintegrate the negative active material layer making it difficult to improve cycle characteristics of the lithium battery. If the charging capacity of the negative active material layer is too high, energy density of the lithium battery including the negative electrode 20 may decrease, making it difficult to improve cycle characteristics. The charging capacity of the positive active material layer may be obtained by multiplying a charging capacity density (mAh/g) of the positive active material by a mass of the positive active material of the positive active material layer. If one or more suitable types (kinds) of positive active materials are utilized, charging capacity density×mass values for all of the positive active materials may be calculated respectively, and a sum of the values is regarded as the charging capacity of the positive active material layer. The charging capacity of the negative active material layer may be calculated in substantially the same manner. The charging capacity of the negative active material layer may be obtained by multiplying a charging capacity density (mAh/g) of the negative active material by a mass of the negative active material of the negative active material layer. If one or more suitable types (kinds) of negative active materials are utilized, charging capacity density×mass values for all of the negative active materials may respectively be calculated and a sum of the values may be regarded as the charging capacity of the negative active material layer. For example, the charging capacity densities of the positive active material and the negative active material may be capacities estimated utilizing all-solid half-cells to which lithium metal is applied as a counter electrode. The charging capacities of the positive active material layer and the negative active material layer may directly be measured utilizing the all-solid half-cells. The charging capacity density may be calculated by dividing the measured charging capacity by the mass of each active material. In one or more embodiments, a charging capacity of the positive active material layer and the negative active material layer may be initial charging capacity measured during charging of a first cycle.

### Lithium Battery

A lithium battery according to one or more embodiments may include: a positive electrode; a negative current collector; and an electrolyte layer arranged between the positive electrode and the negative current collector. The lithium battery may further include a separator. The lithium battery may further include a lithium metal layer between the negative current collector and the electrolyte layer. The lithium battery may further include a negative active material layer between the negative current collector and the electrolyte layer. The lithium battery may also provide excellent or suitable lifespan characteristics. The lithium battery may be, for example, a lithium primary battery, a lithium secondary battery, a lithium-sulfur battery, or a lithium-air battery, but the present disclosure is not limited thereto, and any lithium batteries commonly available in the art may also be utilized.

Although the lithium battery is prepared, for example, by the following method, the method is not limited thereto and may be adjusted according to desired or required conditions.

### Positive Electrode

First, a positive active material composition is prepared by mixing a positive active material, a conductive material, a binder, and a solvent. The prepared positive active material composition may directly be applied onto an aluminum current collector and dried to prepare a positive electrode plate on which a positive active material layer is formed. In one or more embodiments, a positive electrode plate on which a positive active material layer is formed may be prepared by casting the positive active material composition on a separate support and laminating a film separated from the support on an aluminum current collector.

As the positive active material, a compound allowing reversible intercalation and deintercalation of lithium (lithiated intercalation compound) may be utilized. For example, one or more types (kinds) of composite oxides of lithium and a metal selected from among cobalt, manganese, nickel, and any combination thereof may be utilized.

The composite oxide may be a lithium transition metal composite oxide, and examples thereof may be a lithium nickel oxide, a lithium cobalt oxide, a lithium manganese oxide, a lithium iron phosphate compound, a cobalt-free nickel-manganese oxide, or any combination thereof.

Examples of the composite oxides may include one of the compounds represented by the following formulae: LiₐA_{1-b}X_{b}O_{2-c}D_{c} (wherein 0.90≤a≤1.8, 0≤b≤0.5, and 0≤c≤0.05); LiₐMn_{2-b}X_{b}O_{4-c}D_{c} (wherein 0.90≤a≤1.8, 0≤b≤0.5, and 0≤c≤0.05); LiₐNi_{1-b-c}Co_{b}X_{c}O_{2-α}D_{α} (wherein 0.90≤a≤1.8, 0≤b≤0.5, 0≤c≤0.5, and 0<α<2); LiₐNi_{1-b-c}Mn_{b}X_{c}O_{2-α}D_{α} (wherein 0.90≤a≤1.8, 0≤b≤0.5, 0≤c≤0.5, and 0<α<2); LiₐNi_{b}Co_{c}L¹_{d}GₑO₂(wherein 0.90≤a≤1.8, 0≤b≤0.9, 0≤c≤0.5, 0≤d≤0.5, and 0≤e≤0.1); LiₐNiG_{b}O₂ (wherein 0.90≤a≤1.8 and 0.001≤b≤0.1); LiₐCoG_{b}O₂ (wherein 0.90≤a≤1.8 and 0.001≤b≤0.1); LiₐMn_{1-b}G_{b}O₂ (wherein 0.90≤a≤1.8 and 0.001≤b≤0.1); LiₐMn₂G_{b}O₄ (wherein 0.90≤a≤1.8 and 0.001≤b≤0.1); LiₐMn_{1-g}G_{g}PO₄ (wherein 0.90≤a≤1.8 and 0≤g≤0.5); Li_{(3-f)}Fe₂(PO₄)₃ (wherein 0≤f≤2); and LiₐFePO₄ (wherein 0.90≤a≤1.8).

In the formulae, A may be Ni, Co, Mn, or any combination thereof; X may be Al, Ni, Co, Mn, Cr, Fe, Mg, Sr, V, a rear earth element, or any combination thereof; D may be O, F, S, P, or any combination thereof; G may be Al, Cr, Mn, Fe, Mg, La, Ce, Sr, V, or any combination thereof; and L¹ may be Mn, Al or any combination thereof.

For example, the positive active material may be a high nickel-based positive active material having a nickel content (e.g., amount) of about 80 mol% or more, about 85 mol% or more, about 90 mol% or more, about 91 mol% or more, or about 94 mol% or more but not more than about 99 mol% based on about 100 mol% of metals other than lithium in the lithium transition metal composite oxide. The high nickel-based positive active material capable of realizing high capacity may be applied to a lithium secondary battery having high capacity and high density.

The positive active material may be, for example, LiₐNiₓCo_{y}M_{z}O_{2-b}A_{b} (wherein 1.0≤a≤1.2, 0≤b≤0.2, 0.8≤x<1, 0<y≤0.3, 0<z≤0.3, x+y+z=1, and M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or any combination thereof, and A is F, S, Cl, Br, or any combination thereof), LiNiₓCo_{y}Mn_{z}O₂ (wherein 0.8≤x≤0.95, 0≤y≤0.2, 0<z≤0.2 and x+y+z=1), LiNiₓCo_{y}Al_{z}O₂ (wherein 0.8≤x≤0.95, 0≤y≤0.2, 0<z≤0.2, and x+y+z=1), LiNiₓCo_{y}Mn_{z}Al_{w}O₂ (wherein 0.8≤x≤0.95, 0≤y≤0.2, 0<z≤0.2, 0<w≤0.2, and x+y+z+w=1), LiₐCoₓM_{y}O_{2-b}A_{b} (wherein 1.0≤a≤1.2, 0≤b≤0.2, 0.9≤x≤1, 0≤y≤0.1, x+y=1, and M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or any combination thereof, and A is F, S, Cl, Br, or any combination thereof), LiₐNiₓMn_{y}M'_{z}O_{2-b}A_{b} (wherein 1.0≤a≤1.2, 0≤b≤0.2, 0<x≤0.3, 0.5≤y<1, 0<z≤0.3, x+y+z=1, and M' is cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or any combination thereof, and A is F, S, Cl, Br, or any combination thereof), LiₐM1ₓM2_{y}PO_{4-b}X_{b} (wherein 0.90≤a≤1.1, 0≤x≤0.9, 0≤y≤0.5, 0.9<x+y<1.1, 0≤b≤2, M1 is chromium (Cr), manganese (Mn), iron (Fe), cobalt (Co), nickel (Ni), copper (Cu), zirconium (Zr), or any combination thereof, M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or any combination thereof, and X is O, F, S, P, or any combination thereof), or LiₐM3_{z}PO₄ (wherein 0.90≤a≤1.1, 0.9≤z≤1.1, and M3 is chromium (Cr), manganese (Mn), iron (Fe), cobalt (Co), nickel (Ni), copper (Cu), zirconium (Zr), or any combination thereof).

The conductive material may be carbon black, graphite particulates, natural graphite, artificial graphite, acetylene black, Ketjen black, carbon fiber; carbon nanotubes; metal such as copper, nickel, aluminum, and silver each of which is utilized in powder, fiber, or tube form; or conductive polymers such as polyphenylene derivatives, but the present disclosure is not limited thereto and any material commonly utilized in the art as conductive materials may also be utilized. In one or more embodiments, the positive electrode may not include (e.g., may exclude) a separate conductive material.

The binder may be a vinylidene fluoride/hexafluoropropylene copolymer, polyvinylidene fluoride, polyacrylonitrile, polymethylmethacrylate, polytetrafluoroethylene (PTFE), a mixture thereof, or a styrene butadiene rubber polymer. The solvent may be N-methylpyrrolidone (NMP), acetone, and water, but the present disclosure is not limited thereto and any solvent commonly utilized in the art may also be utilized.

A positive electrode for a lithium secondary battery may include a current collector and a positive active material layer formed on the current collector. The positive active material layer may include a positive active material and may further include a binder and/or a conductive material.

For example, the positive electrode may further include an additive capable of serving as a sacrificial positive electrode.

An amount of the positive active material may be from about 90 wt% to about 99.5 wt% based on about 100 wt% of the positive active material layer and amounts of the binder and the conductive material may each independently be from about 0.5 wt% to about 5 wt% based on (100 wt% of) the positive active material layer.

The binder may hold the positive active material particles together and bind the positive active material to the current collector. Examples of the binder may include polyvinyl alcohol, carboxymethyl cellulose, hydroxypropyl cellulose, diacetylcellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylate styrene-butadiene rubber, epoxy resin, (meth)acrylic resin, polyester resin, and nylon, but are not limited thereto.

The conductive material may be utilized to provide conductivity to an electrode and may be any conductive material that does not cause any chemical change in a battery and has conductivity (e.g., is a conductor). Examples of the conductive material may include: a carbonaceous material such as natural graphite, artificial graphite, carbon black, acetylene black, Ketjen black, carbon fiber, carbon nanofiber, and carbon nanotube; a metallic material such as copper, nickel, aluminum, and silver, each of which may be utilized in powder or fiber form; a conductive polymer such as a polyphenylene derivative; or any mixture thereof.

The positive current collector may include, for example, (e.g., may be in the form of) a plate or foil formed of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The positive current collector may have a thickness of, for example, about 1 µm to about 100 µm, about 1 µm to about 50 µm , about 5 µm to about 25 µm, or about 10 µm to about 20 µm.

The positive current collector may include, for example, a base film and a metal layer arranged on a side (e.g., one side or both sides (e.g., opposite sides)) of the base film. The base film may include, for example, a polymer. The polymer may be, for example, a thermoplastic polymer. The polymer may include, for example, polyethyleneterephthalate (PET), polyethylene (PE), polypropylene (PP), polybutyleneterephthalate (PBT), polyimide (PI), or any combination thereof. The base film may be, for example, an insulator. If the base film includes an insulating thermoplastic polymer, the base film may soften or liquefy in the event of a short circuit to stop the operation of a battery, thereby inhibiting a rapid increase in currents. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), or an alloy thereof. The metal layer may act as an electrochemical fuse to be cut if an overcurrent occurs, thereby preventing or reducing a short circuit. By controlling a thickness of the metal layer, a limiting current and a maximum current may be adjusted. The metal layer may be plated or deposited on the base film. As the thickness of the metal layer decreases, the limiting current and/or maximum current of the positive current collector may decrease, so that stability of the lithium battery may be improved in the event of occurrence of a short circuit. A lead tab may be added onto the metal layer for connection with the outside. The lead tab may be welded to the metal layer or a metal layer/base film stack structure by ultrasonic welding, laser welding, spot welding, and/or the like. While the base film and/or the metal layer melts during welding, the metal layer may be electrically connected to the lead tab. A metal chip may further be added between the metal layer and the lead tab for stronger welding between the metal layer and the lead tab. The metal chip may be a chip of the same material as the metal of the metal layer. The metal chip may be, for example, metal foil and metal mesh. The metal chip may be, for example, Al foil, copper foil, and SUS foil. By disposing the metal chip on the metal layer and performing welding, the lead tab may be welded to a metal chip/metal layer stack structure or a metal chip/metal layer/base film stack structure. While the base film, the metal layer, and/or the metal chip melt during welding, the metal layer or the metal layer/metal chip stack structure may be electrically connected to the lead tab. A metal chip and/or a lead tab may further be added to a portion of the metal layer. The base film may have a thickness of, for example, about 1 µm to about 50 µm, about 1.5 µm to about 50 µm, about 1.5 µm to about 40 µm, or about 1 µm to about 30 µm. If the thickness of the base film is within the above-described ranges, the weight of the electrode assembly may be reduced more effectively. A melting point of the base film may be, for example, from about 100 °C to about 300 °C, from about 100 °C to about 250 °C, or from about 100 °C to about 200 °C. If the base film has a melting point within the above-described ranges, the base film may melt during a process of welding the lead tab to be easily bound to the lead tab. To improve adhesion between the base film and the metal layer, surface treatment such as corona treatment may be performed on the base film. A thickness of the metal layer may be, for example, from about 0.01 µm to about 3 µm, from about 0.1 µm to about 3 µm, from about 0.1 µm to about 2 µm, or from about 0.1 µm to about 1 µm. If the thickness of the metal layer is within the above-described ranges, stability of the electrode assembly may be obtained while maintaining conductivity thereof. A thickness of the metal chip may be, for example, from about 2 µm to about 10 µm, from about 2 µm to about 7 µm, or from about 4 µm to about 6 µm. If the thickness of the metal chip is within the above-described ranges, the metal layer may be connected to the lead tab more easily. If the positive current collector has the above-described structure, the weight of the positive electrode may be reduced, so that energy density of the positive electrode and the lithium battery may be increased.

### Electrolyte Layer

Subsequently, an electrolyte layer may be prepared. The electrolyte layer may include the gel polymer electrolyte according to one or more embodiments.

The electrolyte layer may further include a separator.

Any separators commonly available in the art for lithium batteries may be utilized.

As the separator, polyethylene, polypropylene, polyvinylidene fluoride, or a multilayered film having two or more layers thereof may be utilized. A mixed multilayered film such as a polyethylene/polypropylene double-layered separator, a polyethylene/polypropylene/polyethylene triple-layered separator, a polypropylene/polyethylene/polypropylene triple-layered separator may also be utilized.

The separator may include a porous substrate and a coating layer including an organic material, an inorganic material, or any combination thereof and arranged on a side (e.g., one side or both sides (e.g., opposite sides)) of the porous substrate.

The porous substrate may be a porous film, and the porous film may be a woven or non-woven fabric.

The porous substrate may include olefin resin, fluorine resin, ester resin, imide resin, acrylic resin, cellulose resin, or any combination thereof, and the olefin resin may include polyethylene, polypropylene, or any combination thereof.

The fluorine resin may include polyvinylidene fluoride, polytetrafluoroethylene, or any combination thereof. The ester resin may include polyethyleneterephthalate, polybutyleneterephthalate, or any combination thereof. The imide resin may include polyamideimide, polyetherimide, or any combination thereof. The acrylic resin may include polyacrylonitrile, polyacrylate, or any combination thereof. The cellulose resin may include carboxymethylcellulose, microbial cellulose, plant cellulose, animal cellulose, or any combination thereof.

The porous substrate may be a polymer film formed of a polymer selected from among a polyolefin such as polyethylene and polypropylene, a polyester such as polyethyleneterephthalate and polybutyleneterephthalate, polyacetal, polyamide, polyimide, polycarbonate, polyetherketone, polyaryletherketone, polyetherimide, polyamideimide, polybenzimidazole, polyethersulfone, polyphenyleneoxide, a cyclic olefin copolymer, polyphenylenesulfide, polyethylenenaphthalate, glass fiber, Teflon, and polytetrafluoroethylene, or a copolymer or mixture of two or more thereof.

The organic material may include a polyvinylidene fluoride-based polymer or a (meth)acrylic polymer.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and any combination thereof, but the present disclosure is not limited thereto.

The organic material and the inorganic material may be present in a mixed state in a coating layer or in a stack structure in which an organic material-containing coating layer and an inorganic material-containing coating layer are stacked.

The lithium battery according to one or more embodiments may further include a solid electrolyte. The solid electrolyte may be, for example, an oxide-based solid electrolyte, a sulfide-based solid electrolyte, or any combination thereof.

The solid electrolyte may be, for example, an oxide-based solid electrolyte. The oxide-based solid electrolyte may include at least one selected from among Li_{1,x,y}AlₓTi₂₋ₓSi_{y}P₃-_{y}O₁₂ (wherein 0<x<2 and 0≤y<3), Li₃PO₄, LiₓTi_{y}(PO₄)₃ (wherein 0<x<2 and 0<y<3), LiₓAl_{y}Ti_{z}(PO₄)₃ (wherein 0<x<2, 0<y<1, and 0<z<3), Li_{1+x+y}(Al, Ga)ₓ(Ti, Ge)₂₋ₓSi_{y}P_{3-y}O₁₂ (wherein 0≤x≤1 and 0≤y≤1), LiₓLa_{y}TiO₃ (wherein 0<x<2 and 0<y<3), Li₂O, LiOH, Li₂CO₃, LiAlO₂, Li₂O-Al₂O₃-SiO₂-P₂O₅-TiO₂-GeO₂, and Li₃₊ₓLa₃M₂O₁₂ (wherein M = Te, Nb, or Zr, and x is an integer from 1 to 10). The solid electrolyte may be manufactured by a sintering method, and/or the like. For example, the oxide-based solid electrolyte may be a garnet-type or kind solid electrolyte (e.g., garnet) selected from among Li₇La₃Zr₂O₁₂ (LLZO) and Li₃₊ₓLa₃Zr₂₋ₐMₐO₁₂ (M doped LLZO, wherein M=Ga, W, Nb, Ta, or Al and x is an integer from 1 to 10).

For example, the sulfide-based solid electrolyte may include, for example, lithium sulfide, silicon sulfide, phosphorous sulfide, boron sulfide, or any combination thereof. The sulfide-based solid electrolyte particles may include Li₂S, P₂S₅, SiS₂, GeS₂, B₂S₃ or any combination thereof. The sulfide-based solid electrolyte particles may be Li₂S or P₂S₅. Sulfide-based solid electrolyte particles are suitable to have higher lithium ion conductivity than other inorganic compounds. For example, the sulfide-based solid electrolyte may include Li₂S and P₂S₅. If a sulfide solid electrolyte material constituting the sulfide-based solid electrolyte includes Li₂S-P₂S₅, a mixing molar ratio of Li₂S to P₂S₅ may be, for example, in the range of about 50:50 to about 90:10. In one or more embodiments, an inorganic solid electrolyte prepared by adding Li₃PO₄, a halogen atom, a halogen compound, Li₂₊₂ₓZn₁₋ₓGeO₄ ("LISICON", wherein 0≤x<1), Li_{3+y}PO₄₋ₓNₓ ("LIPON", wherein 0<x<4 and 0<y<3), Li_{3.25}Ge_{0.25}P_{0.75}S₄ ("Thio-LISICON"), Li₂O-Al₂O₃-TiO₂-P₂O₅ ("LATP"), and/or the like to an inorganic solid electrolyte such as Li₂S-P₂S₅, SiS₂, GeS₂, B₂S₃, or any combination thereof may be utilized as the sulfide-based solid electrolyte. Non-limiting examples of the sulfide-based solid electrolyte material may include Li₂S-P₂S₅; Li₂S-P₂S₅-LiX (wherein X is a halogen atom); Li₂S-P₂S₅-Li₂O; Li₂S-P₂S₅-Li₂O-LiI; Li₂S-SiS₂; Li₂S-SiS₂-LiI; Li₂S-SiS₂-LiBr; Li₂S-SiS₂-LiCl; Li₂S-SiS₂-B₂S₃-LiI; Li₂S-SiS₂-P₂S₅-LiI; Li₂S-B₂S₃; Li₂S-P₂S₅-ZₘSₙ (wherein 0<m<10, 0<n<10, and Z=Ge, Zn or Ga); Li₂S-GeS₂; Li₂S-SiS₂-Li₃PO₄; and Li₂S-SiS₂-LiₚMO_{q} (wherein 0<p<10, 0<q<10, and M=P, Si, Ge, B, Al, Ga, or In). In this regard, the sulfide-based solid electrolyte material may be manufactured by treating starting materials (e.g., Li₂S and P₂S₅) of the sulfide-based solid electrolyte by a melt quenching method, a mechanical milling method, and/or the like. Also, a calcination process may further be performed after the above process. The sulfide-based solid electrolyte may be in an amorphous or crystalline form or in a mixed form thereof.

### Negative Electrode

The negative electrode may include a negative current collector.

In one or more embodiments, the negative current collector 21 may include, for example, a base film and a metal layer arranged on one side or both sides (e.g., opposite sides) of the base film. The base film may include, for example, a polymer. The polymer may be, for example, a thermoplastic polymer. The polymer may include, for example, polyethyleneterephthalate (PET), polyethylene (PE), polypropylene (PP), polybutyleneterephthalate (PBT), polyimide (PI), or any combination thereof. The polymer may be an insulating polymer. If the base film includes an insulating thermoplastic polymer, the base film may soften or liquefy in the event of a short circuit to stop the operation of a battery, thereby inhibiting a rapid increase in currents. The metal layer may include, for example, copper (Cu), stainless steel, titanium (Ti), iron (Fe), cobalt (Co), nickel (Ni), or an alloy thereof. The metal layer may correspond to, for example, the first metal substrate. The metal layer may further include a coating layer including a second metal. The negative current collector 21 may further include a metal chip and/or a lead tab. For detailed descriptions of the base film, the metal layer, the metal chip, and the lead tab of the negative current collector 21, refer to the above-described positive current collector. If the negative current collector 21 has the above-described structure, the weight of the negative electrode may be reduced, so that energy density of the negative electrode and the lithium battery may be increased.

The negative current collector may include, for example, copper (Cu), nickel (Ni), Ni-coated Cu, stainless steel (SUS), iron (Fe), cobalt (Co), or an alloy thereof.

A negative active material layer may be arranged on the negative current collector. The negative active material layer may be formed as a plated lithium layer after charging. The negative active material layer may also be formed by utilizing a negative active material while assembling the battery.

A method of forming the negative active material layer by utilizing the negative active material may be the same as the method of forming the positive active material layer, except that the negative active material is utilized instead of the positive active material.

The lithium battery may further include, for example, a thin film including elements capable of forming an alloy with lithium on the negative current collector. The thin film may be arranged between the negative current collector and the negative active material layer. The thin film may include, for example, an element capable of forming an alloy with lithium. Examples of the element capable of forming an alloy with lithium may include gold, silver, zinc, tin, indium, silicon, aluminum, and bismuth, but are not limited thereto, and any elements capable of forming an alloy with lithium suitable in the art may also be utilized. The thin film may be formed of any one of the metals or an alloy of one or more suitable types (kinds) of metals. By disposing the thin film on a surface of the negative current collector, the first negative active material layer plated between the thin film and the negative active material layer may become flatter, thereby further improving cycle characteristics of the lithium battery.

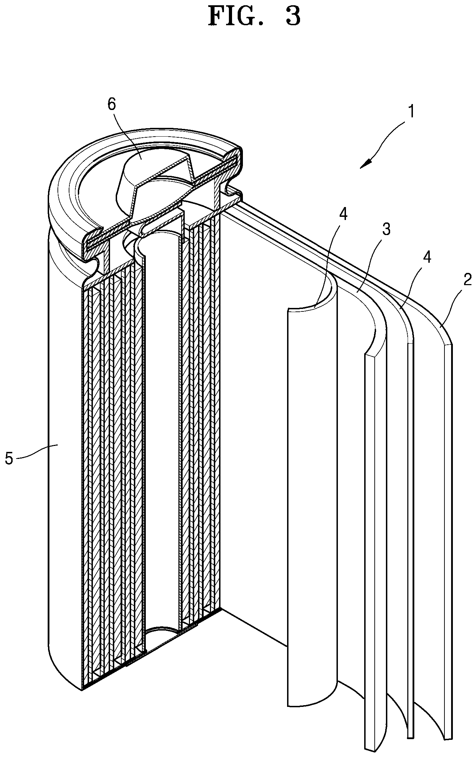

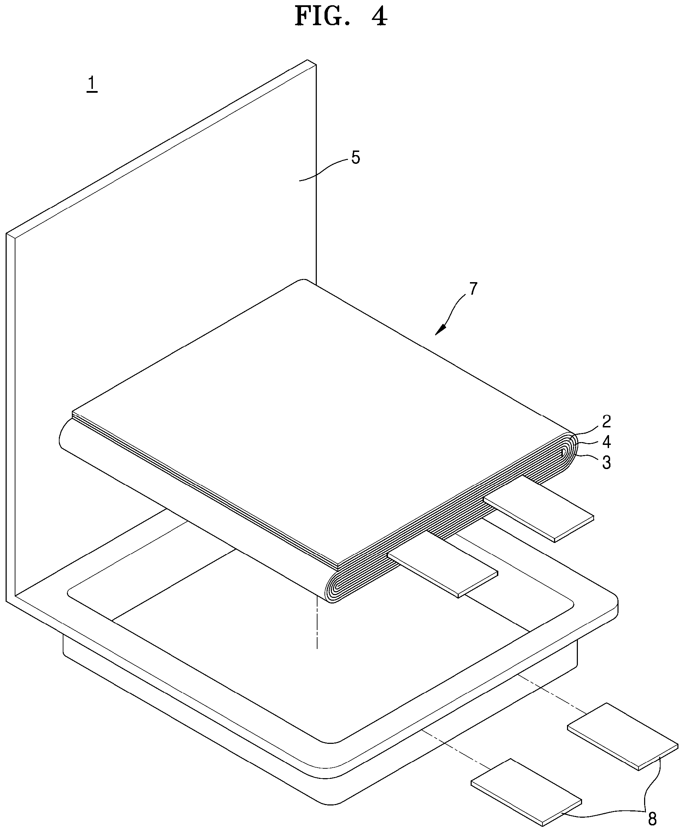

Referring to FIGS. 3 to 5, a lithium battery according to one or more embodiments will be described.

Referring to FIG. 3, a lithium battery 1 according to one or more embodiments may include a positive electrode 3, a negative electrode 2, and a separator 4. The separator may be included in the electrolyte layer according to one or more embodiments.

The gel polymer electrolyte may be arranged on the separator and the gel polymer electrolyte may be included in the separator.

The gel polymer electrolyte may be arranged between the separator and the positive electrode. The positive electrode 3, the negative electrode 2, and the separator 4 may be wound or folded to form a battery assembly. The formed battery assembly may be accommodated in a battery case 5. An organic electrolytic solution may be injected into the battery case 5 and the battery case 5 may be sealed with a cap assembly 6 to complete preparation of the lithium battery 1. The battery case 5 may have a cylindrical shape, but the present disclosure is not limited thereto, and may have, for example, a rectangular shape or a thin film shape.

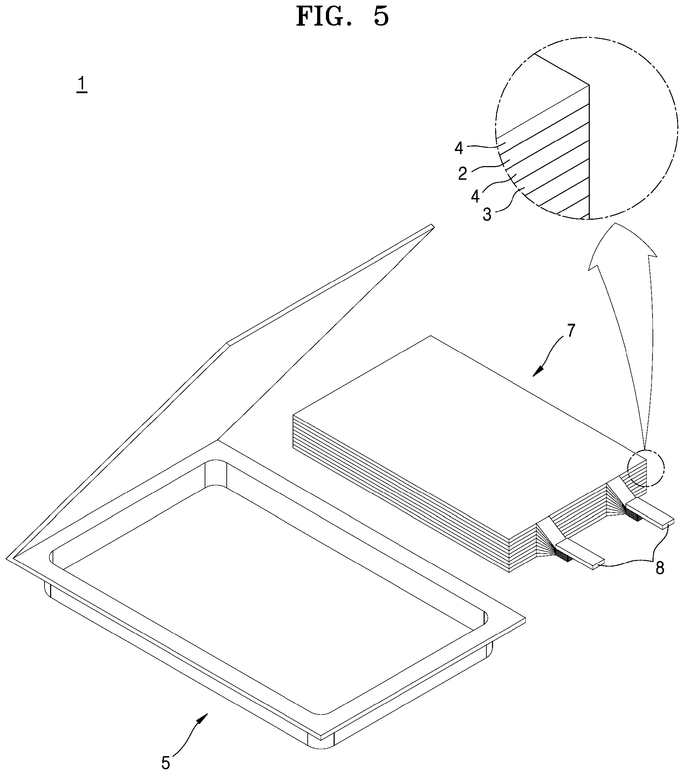

Referring to FIG. 5, a lithium battery 1 according to one or more embodiments may include a positive electrode 3, a negative electrode 2, and a separator 4. The separator may be included in the electrolyte layer according to one or more embodiments.

The gel polymer electrolyte may be arranged on the separator and the gel polymer electrolyte may be included in the separator.

The separator 4 may be arranged between the positive electrode 3 and the negative electrode 2, and the positive electrode 3, the negative electrode 2, and the separator 4 may be wound or folded to form a battery assembly 7. The formed battery assembly 7 may be accommodated in a battery case 5. The lithium battery 1 may include an electrode tab 8 serving as an electrical passage for inducing a current generated in the battery assembly 7 to the outside. An organic electrolytic solution may be injected into the battery case 5 and the battery case 5 may be sealed to complete preparation of the lithium battery 1. The battery case 5 may have a rectangular shape, but the present disclosure is not limited thereto, and may also have, for example, a cylindrical shape or a thin film shape.

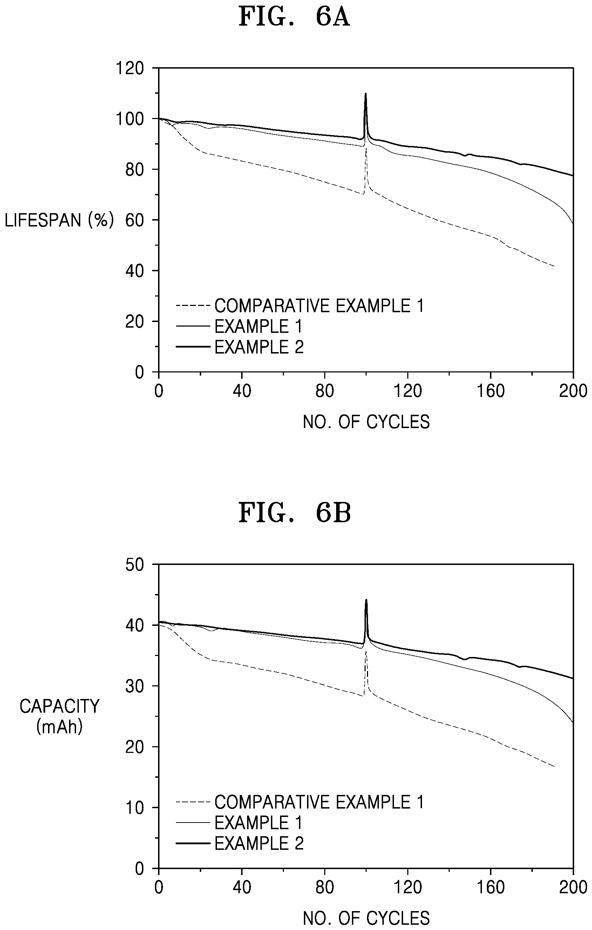

Referring to FIG. 6, a lithium battery 1 according to one or more embodiments may include a positive electrode 3, a negative electrode 2, and a separator 4. The separator may be included in the electrolyte layer according to one or more embodiments. The gel polymer electrolyte may be arranged on the separator and the gel polymer electrolyte may be included in the separator. The separator 4 may be arranged between the positive electrode 3 and the negative electrode 2 to form a battery assembly. The gel polymer electrolyte is not illustrated between the separator and the positive electrode. The battery assembly 7 may be stacked in a bi-cell structure and accommodated in a battery case 5. The lithium battery 1 may include an electrode tab 8 serving as an electrical passage for inducing a current generated in the battery assembly 7 to the outside. An organic electrolytic solution may be injected into the battery case 5 and the battery case 5 may be sealed to complete preparation of the lithium battery 1. The battery case 5 may have a rectangular shape, but the present disclosure is not limited thereto, and may also have for example, a cylindrical shape or a thin film shape.

In a pouch-type or kind lithium battery, a pouch may be utilized as the battery case of the lithium batteries shown in FIGS. 5 and 6. A pouch-type or kind lithium battery may include at least one battery assembly. An electrolyte may be arranged between the positive electrode and the negative electrode or an electrolyte and a separator may be arranged therebetween to form a battery assembly. The battery assembly may be stacked in a bi-cell structure, impregnated with a liquid electrolyte, accommodated and sealed in a pouch to complete preparation of the pouch-type or kind lithium battery. For example, the above-described positive electrode, negative electrode, and separator may be simply stacked in a battery assembly and accommodated in a pouch, or may be wound in a jelly-roll form or folded in a battery assembly and accommodated in a pouch. Subsequently, an organic electrolytic solution may be injected into the pouch and the pouch is sealed to complete preparation of the lithium battery.

The lithium battery according to the present disclosure may be utilized, for example, in electric vehicles (EVs) due to high discharging capacity, excellent or suitable lifespan characteristics, and high energy density. For example, lithium batteries may be utilized in hybrid vehicles such as plug-in hybrid electric vehicles (PHEVs). In one or more embodiments, lithium batteries may be utilized in the fields requiring a large amount of power storage. For example, lithium batteries may be utilized in E-bikes and electric tools.

A plurality of lithium batteries may be stacked to form a battery module, and a plurality of battery modules constitute a battery pack. Such battery packs may be utilized in any device that requires high capacity and high output. For example, battery packs may be utilized in laptop computers, smart phones, and electric vehicles. For example, a battery module may include a plurality of batteries and a frame holding the batteries. The battery pack may include, for example, a plurality of battery modules and a bus bar connecting the battery modules. The battery module and/or the battery pack may further include a cooling device. The plurality of battery packs may be controlled or selected by a battery management system. The battery management system may include a battery pack, and a battery control device connected to the battery pack.

### Method of Manufacturing Lithium Battery

A lithium battery according to one or more embodiments may be manufactured by preparing a negative current collector; preparing a separator; preparing a positive electrode; preparing a battery assembly by stacking the negative current collector, the separator, and the positive electrode; injecting a gel polymer electrolyte-forming composition including a first polymerizable monomer and a second polymerizable monomer, as gel polymer-forming polymerizable monomers, and a liquid electrolyte including a lithium salt and an organic solvent into the battery assembly; and performing crosslinking to form a gel polymer electrolyte.

In the lithium battery according to one or more embodiments, a gel polymer electrolyte-containing separator may be formed in situ by injecting the gel polymer electrolyte-forming composition into the battery assembly and crosslinking the composition as described above. In one or more embodiments, a separator including the gel polymer electrolyte may be separately prepared as a self-standing film and arranged on the negative current collector, and then the positive electrode may be arranged thereon to prepare a lithium battery.

In the gel polymer electrolyte-forming composition, a total amount of the first polymerizable monomer and the second polymerizable monomer may be, for example, from about 0.1 wt% to about 10 wt%, about 0.2 wt% to about 8 wt%, from about 0.5 wt% to about 6 wt%, from about 1 wt% to about 5 wt%, or from about 2 wt% to about 4 wt% based on (100 wt% of) the total weight of the gel polymer electrolyte-forming composition. If the amounts are within the ranges described above, a stable gel polymer electrolyte may be formed.

The separator may further include a liquid electrolyte and/or a gel polymer electrolyte.

A method of crosslinking the gel polymer electrolyte-forming composition is not limited, but the composition may be crosslinked by, for example, heat, ultraviolet rays, and/or the like. In terms of manufacturing efficiency, thermal crosslinking may be utilized. The gel polymer electrolyte-forming composition may include, for example, a thermal initiator. The thermal initiator may be, for example, t-amylperoxide or azobis-based compounds, but the present disclosure is not limited thereto, and any compounds commonly utilized as a thermal initiator may also be utilized. An amount of the thermal initiator may be about 0.1 wt% or less or about 0.05 wt% or less based on (100 wt% of) the total weight of the gel polymer electrolyte-forming composition.

The crosslinking may be performed by heat treatment. The heat treatment may vary according to types (kinds) and/or the like of the first polymerizable monomer and the second polymerizable monomer constituting the gel polymer electrolyte-forming composition, but may be performed, for example, at a temperature of about 40 °C to about 120 °C, about 60 °C to about 110 °C, or about 70 °C to about 100 °C.

The crosslinked product of the gel polymer electrolyte-forming composition may be a resultant obtained by heat treatment performed at a temperature of, for example, about 40 °C to about 120 °C, about 60 °C to about 110 °C, or about 70 °C to about 100 °C. Heat treatment conditions may be adjusted according to the type or kind of the thermal initiator utilized therefor.

The lithium battery may further include a separator. The separator may further include a liquid electrolyte and/or a gel polymer electrolyte.

The method may further include forming a protective layer on the negative current collector.

The forming of the protective layer may be performed by applying a protective layer-forming composition including at least one selected from among a binder precursor and a binder and boron nitride onto the negative current collector, followed by heat treatment. The binder precursor may be, for example, a first polymer and a second polymer, and the binder may be the binder described in the above-described protective layer.

A solvent such as N-methylpyrrolidone and dimethylformamide may be added to the protective layer-forming composition. An amount of the solvent may be from about 0.05 parts by weight to about 5 parts by weight based on about 100 parts by weight of a total weight of the boron nitride and the binder.

The protective layer may further include a lithium salt. An amount of the lithium salt may be from about 30 parts by weight to about 80 parts by weight, from about 40 parts by weight to about 60 parts by weight, or from about 45 parts by weight to about 55 parts by weight based on about 100 parts by weight of the total weight of the binder and the lithium salt.

The protective layer-forming composition may further include the hydroxyl group-containing first polymer and the crosslinkable functional group-containing second polymer. The protective layer formed from the protective layer-forming composition may further include a crosslinked polymer of the first polymer and the second polymer. A mixing weight ratio of the hydroxyl group-containing first polymer to the second polymer may be adjusted to a range of about 50:50 to about 99:1, about 50:50 to about 99:1, or about 60:40 to about 90:10.

The second polymer may include at least one selected from among a fluorine-containing polyamic having a carboxyl group and a fluorine-containing polyimide.

If the second polymer is a fluorine-containing polyamic acid having a carboxyl group, a protective layer-forming composition including the same may be applied onto the negative current collector and dried, and then heat-treated for crosslinking of the first polymer and the second polymer, thereby forming a protective layer having a crosslinked polymer. The heat treatment may vary according to the composition of the first polymer and the second polymer, but may be performed, for example, at a temperature of about 80 °C to about 200 °C, about 100 °C to about 200°C, about 150 °C to about 200°C, or about 150 °C to about 190°C. Within the heat treatment temperature ranges described above, the protective layer formed on the surface of an electrode may minimize or reduce exposure of an electrolytic solution on the surface of an electrode and may form a substantially uniform flow of lithium ions throughout the electrode, thereby effectively inhibiting the growth of lithium dendrite.

Hereinafter, the present disclosure will be described in more detail with reference to the following examples and comparative examples. However, these examples are not intended to limit the purpose and scope of the present disclosure.

### Preparation of Urethane Acrylic Monomer Having Two or More Functional Groups

### Preparation Example 1: Preparation of DRIC (Compound of Formula 3 Below)

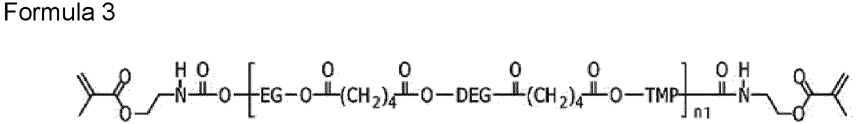

In Formula 3, EG is an ethylene glycol residue, DEG is a diethylene glycol residue, TMP is a trimethylolpropane residue, and n1 is an integer from 1 to 100.

About 150.6 g of adipic acid (AA), about 115.14 g of diethylene glycol (DG), about 81.05 g of ethylene glycol (EG), and about 21.32 g of trimethylolpropane (TMP) were added to a reactor at room temperature (about 25 °C) and heated to about 220 °C. Titanium isopropoxide (TIP) was added to the reactor. After the mixture was treated in a full vacuum, primary reaction was performed at about 220 °C for 10 hours to obtain polyester polyol. After primarily cooling the polyester polyol to about 130 °C, the polyol was treated in a vacuum at about 130 °C for 2 hours and secondarily cooled at about 75 °C. About 18.24 g of isocyanatoethyl methacrylate (ICEMA), about 0.54 g of monomethyl ether hydroquinone (MEHQ), about 0.566 g of butylated hydroxy toluene (BHT), and about 0.526 g of dibutyl-tin-dilaulate (DBTDL) were added to the polyester polyol, followed by secondary reaction at a temperature of about 70 °C to about 80 °C for about 3 hours to obtain the compound of Formula 3 (DRIC).

### Manufacture of Lithium Battery

### Example 1: GPE (Gel Polymer (DPHA + DRIC (weight ratio: 2:2) + LE (0.6 M LiDFOB + 0.6 M LiBF4 in FEC:DEC (1:2 v/v)))

An about 20 µm-thick polyethylene single layer, as a separator, was stacked on one side of an about 10 µm-thick copper foil, as a negative current collector, and a positive electrode was stacked on the other side of the separator to prepare a stack structure. A gel polymer electrolyte (GPE)-forming composition was injected into the prepared stack structure, followed by heat treatment at about 70°C for about 120 minutes to prepare a lithium battery. The lithium battery had a positive electrode/gel polymer electrolyte (separator)/protective layer/negative current collector structure. The lithium battery includes a gel polymer electrolyte in pores of the separator.

The gel polymer electrolyte-forming composition was prepared by mixing dipentaerythritol hexaacrylate (DPHA) as the first polymerizable monomer, a compound represented by Formula 3 (DRIC) as the second polymerizable monomer, and benzoin ethyl ether (Sigma-Aldrich, 240.30 g/mol) as a liquid electrolyte and initiator. A mixing weight ratio of DPHA to DRIC was 2:1.

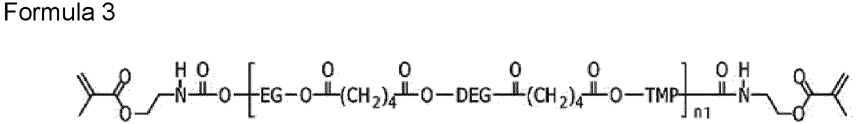

In Formula 3, EG is an ethylene glycol residue, DEG is a diethylene glycol residue, TMP is a trimethylolpropane residue, and n1 is 10.

The liquid electrolyte was prepared by adding about 0.6 M LiBF₄ and about 0.6 M lithium difluoro(oxalate)borate (LiDFOB) to a mixed solvent of diethyl carbonate (DEC) and fluoroethylene carbonate (FEC) mixed in a volume ratio of about 2:1.

The gel polymer electrolyte-forming composition included about 2 parts by weight of DPHA, about 2 parts by weight of DRIC, about 96 parts by weight of the liquid electrolyte, and an initiator based on about 100 parts by weight of a total weight of the composition. The initiator was utilized in an amount of about 5 parts by weight based on about 100 parts by weight of a total weight of the crosslinkable monomers, DPHA and DIRC.

The positive electrode was prepared according to the following method.

Li_{1.04}Ni_{0.88}Co_{0.1}Al_{0.02}O₂ powder and a carbonaceous conductive material (Super-P; Timcal Ltd.) were uniformly (e.g., substantially uniformly) mixed in a weight ratio of about 90:5, and a polyvinylidene fluoride (PVDF) binder solution was added thereto such that a weight ratio of active material:carbonaceous conductive material:binder was about 90:5:5, to prepare a positive active material slurry.

The cathode active material slurry prepared according to the above-described process was applied onto an about 15 µm-thick aluminum substrate utilizing a doctor blade and dried at about 120 °C under a reduced pressure, and then rolled utilizing a roll press into a sheet to prepare a positive electrode.

### Example 2: GPE (Gel Polymer (DPHA + DRIC (weight ratio: 3:1) + LE (0.6 M LiDFOB + 0.6 M LiBF4 in FEC:DEC (1:2 v/v)))

A lithium battery was prepared in substantially the same manner as in Example 1, except that a mixing weight ratio of DPHA to DRIC, which were crosslinkable monomers utilized in the preparation of the gel polymer electrolyte-forming composition, was modified to about 3:1.

### Example 3: GPE (Gel Polymer (DPHA + DRIC (weight ratio: 5:1) + LE (0.6 M LiDFOB + 0.6 M LiBF4 in FEC:DEC (1:2 v/v)))

A lithium battery was prepared in substantially the same manner as in Example 1, except that a mixing weight ratio of DPHA to DRIC utilized in the preparation of the gel polymer electrolyte-forming composition, was modified to about 5:1.

### Example 4: GPE (Gel Polymer (DPHA + DUDMA (weight ratio: 3:1) + LE (0.6 M LiDFOB + 0.6 M LiBF4 in FEC:DEC (1:2 v/v)))

A lithium battery was prepared in substantially the same manner as in Example 2, except that a compound of Formula 8 (DUDMA, Sigma-Aldrich, about 470.56/mol) was utilized instead of DRIC of Formula 3 in the preparation of the gel polymer electrolyte-forming composition.

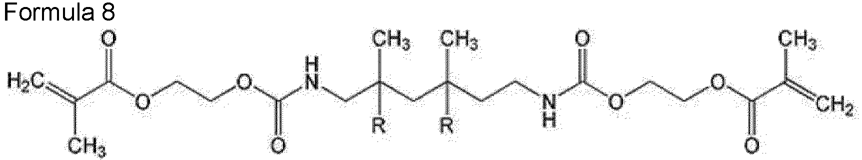

In Formula 8, R is H, CH₃, or any combination thereof, a H:CHs ratio is about 1:1, and the compound of Formula 8 is a mixture of isomers.

### Example 5: GPE (Gel Polymer (TMPTMA + DRIC (weight ratio: 3:1) + LE (0.6 M LiDFOB + 0.6 M LiBF4 in FEC:DEC (1:2 v/v)))

A lithium battery was prepared in substantially the same manner as Example 2, except that trimethylolpropane triacrylate (TMPTMA) was utilized instead of DPHA in the preparation of the gel polymer electrolyte-forming composition.

### Comparative Example 1: Use of Gel Polymer Formed Using DPHA

A lithium battery was prepared in substantially the same manner as in Example 2, except that only DPHA was utilized as the polymerizable monomer in the preparation of the gel polymer electrolyte-forming composition.

### Comparative Example 2: Use of Gel Polymer Formed Using Difunctional Monomer (PEO-DMA) + DRIC

A lithium battery was prepared in substantially the same manner as in Example 2, except that polyethylene glycol dimethacrylate (PEO-DMA) that is a difunctional monomer was utilized instead of DPHA as a polymerizable monomer in the preparation of the gel polymer electrolyte-forming composition. PEO-DMA is polyethylene glycol) dimethacrylate disclosed in Example 2C of WO2017/153310A..

### Comparative Example 3

A lithium battery was prepared in substantially the same manner as in Example 2, except that only DRIC was utilized as a polymerizable monomer in the preparation of the gel polymer electrolyte-forming composition.

### Evaluation Example 1: Lifespan at High Temperature (45 °C)

Charging and discharging characteristics of each of the lithium batteries of Examples 1 to 5 and Comparative Examples 1 to 3 were evaluated under the following conditions.

The lithium metal battery was charged at about 45 °C at a constant current of about 0.1 C rate until a voltage reached about 4.3 V (vs. Li) and the charging process was cut-off at a rate of about 0.05 C rate in a constant voltage mode while the voltage of about 4.3 V was maintained. Subsequently, the lithium battery was discharged at a constant current of about 0.1 C rate until the voltage reached about 3.6 V (vs. Li) during discharging (formation cycle).

The lithium battery that had undergone the formation cycle was charged at a constant current of 0.2 C rate at 25 °C until the voltage reached 4.3 V (vs. Li), and then the charging process was cut-off at a current of 0.05 C rate in a constant voltage mode while maintaining the voltage of 4.3 V. Subsequently, the lithium battery was discharged at a constant current of 0.5 C rate until the voltage reached 3.6 V (vs. Li) during discharging (1^{st} cycle). This cycle was repeated to a 300^{th} cycle under the same conditions.

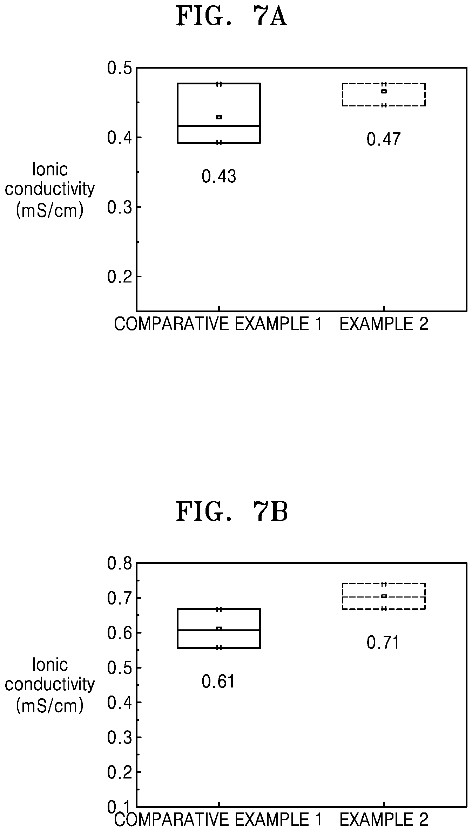

The lithium metal batteries were rested for about 10 minutes after every charging/discharging cycle. Some results of the charging/discharging test were shown in FIGS. 6A and 6B . FIG. 6A shows lifespan characteristics of lithium batteries of Examples 1 and 2 and Comparative Example 1 after 200 cycles. FIG. 7B shows capacity variation of lithium batteries of Examples 1 and 2 and Comparative Example 1 after 200 cycles.

Lifespan characteristics were evaluated according to Equation 1 and shown in Table 1. Lifespan characteristics (%)=(Discharge capacity at 300th cycle/discharge capacity at 2nd cycle)×100

In Table 1, the number of cycles refers to a number of cycles desired or required to reduce a discharge capacity to about 80 % of a standard capacity after a second cycle. As the number of cycles increases, it was considered to have excellent or suitable lifespan characteristics.

**Table 1**

| Category | Conditions | Initial efficiency (%) | No. of cycles (%) | Lifespan (%) |
|---|---|---|---|---|
| Example 1 | GPE (Gel Polymer (DPHA + DRIC (weight ratio: 2:2) + LE (0.6 M LiDFOB + 0.6 M LiBF4 in FEC:DEC (1:2 v/v))) | 76.41 | 152 | 41.31 |
| Example 2 | GPE (Gel Polymer (DPHA + DRIC (weight ratio: 3:1) + LE (0.6 M | 76.75 | 186 | 58.71 |
| | LiDFOB + 0.6 M LiBF4 in FEC:DEC (1:2 v/v))) | | | |
| Example 3 | GPE (Gel Polymer (DPHA + DRIC (weight ratio: 5:1) + LE (0.6 M LiDFOB + 0.6 M LiBF4 in FEC:DEC (1:2 v/v))) | 76.59 | 177 | 52.3 |
| Example 4 | GPE (Gel Polymer (DPHA + DUDMA (weight ratio: 3:1) + LE (0.6 M LiDFOB + 0.6 M LiBF4 in FEC:DEC (1:2 v/v))) | 76.77 | 172 | 53.4 |
| Example 5 | GPE (Gel Polymer (TMPTMA + DRIC (weight ratio: 3:1) + LE (0.6 M LiDFOB + 0.6 M LiBF4 in FEC:DEC (1:2 v/v))) | 77.02 | 137 | 39.3 |
| Comparative Example 1 | GPE: DPHA | 76.81 | 57 | - |
| Comparative Example 2 | GPE: PEO-DMA+ DRIC | 76.55 | 37 | - |
| Comparative Example 3 | GPE: DRIC | 73.17 | 89 | - |

In Table 1, "-" refers to a measurement was not possible because the battery did not operate.

As shown in Table 1, it was confirmed that the lithium batteries of Examples 1 to 5 had improved lifespan characteristics compared to Comparative Examples 1 to 3.

Although initial efficiency of the lithium battery of Comparative Example 1 was similar to that of the lithium batteries of Examples 1 and 2, lifespan at room temperature thereof was significantly reduced compared to the lithium batteries of Examples 1 to 5.

### Evaluation Example 2: Ionic Conductivity

Ionic conductivity of the gel polymer electrolyte utilized in the lithium batteries of Examples 2 to 4 was measured at room temperature (about 25 °C) and at a high temperature (about 45 °C) and shown in Table 2 and FIGS. 7A and 7B. Ionic conductivity was measured by measuring resistance while scanning a temperature by applying a voltage bias of about 10 mV to the gel polymer electrolyte in a frequency range of about 1 Hz to about 1 MHz.

FIG. 7A shows ionic conductivity of the gel polymer electrolytes of the lithium batteries of Example 2 and Comparative Example 1 at room temperature, and FIG. 7B shows ionic conductivity of the gel polymer electrolytes of the lithium batteries of Example 2 and Comparative Example 1 at a high temperature.

**Table 2**

| Category | Ionic conductivity at room temperature (mS/cm) | Ionic conductivity at high-temperature (mS/cm) |
|---|---|---|
| Example 2 | 0.47 | 0.71 |
| Example 3 | 0.45 | 0.63 |
| Example 4 | 0.44 | 0.70 |
| Comparative Example 1 | 0.43 | 0.61 |

As shown in Table 2, the gel polymer electrolytes of the lithium batteries of Examples 2 to 4 had ionic conductivities not less than about 0.44 mS/cm at about 25 °C at about 1 atm and ionic conductivities not less than about 0.63 mS/cm at about 45 °C at about 1 atm.

Among them, it was confirmed that the gel polymer electrolyte of the lithium battery of Example 2 had improved ionic conductivity at room temperature and at a high temperature compared to the gel polymer electrolyte of Comparative Example 1 as shown in FIGS. 7A and 7B.

### Evaluation Example 3: High-rate Characteristics

Each of the lithium batteries prepared in Examples 1 to 5 and Comparative Examples 1 to 3 was charged at a constant current of about 0.1 C rate at about 25 °C until a voltage reached about 4.3 V (vs. Li), and the charging process was cut-off at a rate of about 0.05 C rate in a constant voltage mode while the voltage of about 4.3 V was maintained. Subsequently, the lithium battery was discharged at a constant current of about 0.1 C rate until the voltage reached about 3.6 V (vs. Li) during discharging (formation cycle).

The lithium battery that had undergone the formation cycle was charged at a constant current of about 0.2 C rate at about 25 °C until the voltage reached about 4.3 V (vs. Li), and then the charging process was cut-off at a current of about 0.05 C rate in a constant voltage mode while maintaining the voltage of about 4.3 V. Subsequently, the lithium battery was discharged at a constant current of about 0.2 C rate until the voltage reached about 3.6 V (vs. Li) during discharging (4^{th} cycle).

The lithium battery that had undergone the 1^{st} cycle was charged at a constant current of about 0.2 C rate at about 25 °C until the voltage reached about 4.3 V (vs. Li), and then the charging process was cut-off at a current of about 0.05 C rate in a constant voltage mode while maintaining the voltage of about 4.3 V. Subsequently, the lithium batteries were discharged at a constant current of about 0.5 C rate until the voltage reached about 2.8 V (vs. Li) (5^{th} cycle).

This cycle was repeated from 5^{th} cycle to 9^{th} cycle under the same conditions.

The lithium battery that had undergone the 7^{th} cycle was charged at a constant current of about 0.33 C rate at about 25 °C until the voltage reached about 4.35 V (vs. Li), and then the charging process was cut-off at a current of about 0.05 C rate in a constant voltage mode while maintaining the voltage of about 4.35 V. Subsequently, the lithium batteries were discharged at a constant current of about 3 C rate until the voltage reached about 2.8 V (vs. Li) (13^{th} cycle).

This cycle was repeated from 8^{th} cycle to 18^{th} cycle under the same conditions.

The lithium battery that had undergone the 17^{th} cycle was charged at a constant current of about 0.33 C rate at about 25 °C until the voltage reached about 4.35 V (vs. Li), and then the charging process was cut-off at a current of about 0.05 C rate in a constant voltage mode while maintaining the voltage of about 4.35 V. Subsequently, the lithium batteries were discharged at a constant current of about 3 C rate until the voltage reached about 2.8 V (vs. Li) (19^{th} cycle).

This cycle was repeated from 19^{th} cycle to 23^{rd} cycle under the same conditions.

The lithium battery that had undergone the 23^{rd} cycle was charged at a constant current of about 0.33 C rate at about 25 °C until the voltage reached about 4.35 V (vs. Li), and then the charging process was cut-off at a current of about 0.05 C rate in a constant voltage mode while maintaining the voltage of about 4.35 V. Subsequently, the lithium batteries were discharged at a constant current of about 0.2 C rate until the voltage reached about 2.8 V (vs. Li) (24^{th} cycle).

The lithium battery that had undergone the 24^{th} cycle was charged at a constant current of about 0.33 C rate at about 25 °C until the voltage reached about 4.35 V (vs. Li), and then the charging process was cut-off at a current of about 0.05 C rate in a constant voltage mode while maintaining the voltage of about 4.35 V. Subsequently, the lithium batteries were discharged at a constant current of about 0.5 C rate until the voltage reached about 2.8 V (vs. Li) (25^{th} cycle). This cycle was repeated from 25^{th} cycle to 30^{th} cycle under the same conditions.

All of the lithium batteries were rested for about 10 minutes after every charging/discharging cycle.

Some results of the charging/discharging test are shown in Table 3.

High-rate characteristics are defined as shown in Equation 2. High-rate characteristics [%] = [Discharge capacity at 23rd cycle (3 C rate)/discharge capacity at 2nd cycle (0.2 C rate)]×100

**Table 3**

| Category | Conditions | High-rate characteristics (%) |
|---|---|---|
| Example 1 | GPE (Gel Polymer (DPHA + DRIC (weight ratio: 2:2) + LE (0.6 M LiDFOB + 0.6 M LiBF4 in FEC:DEC (1:2 v/v))) | 40.4 |
| Example 2 | GPE (Gel Polymer (DPHA + DRIC (weight ratio: 3:1) + LE (0.6 M LiDFOB + 0.6 M LiBF4 in FEC:DEC (1:2 v/v))) | 43.2 |
| Example 3 | GPE (Gel Polymer (DPHA + DRIC (weight ratio: 5:1) + LE (0.6 M LiDFOB + 0.6 M LiBF4 in FEC:DEC (1:2 v/v))) | 42.1 |
| Example 4 | GPE (Gel Polymer (DPHA + DUDMA (weight ratio: 3:1) + LE (0.6 M LiDFOB + 0.6 M LiBF4 in FEC:DEC (1:2 v/v))) | 44.5 |
| Example 5 | GPE (Gel Polymer (PETA + DRIC (weight ratio: 3:1) + LE (0.6 M LiDFOB + 0.6 M LiBF4 in FEC:DEC (1:2 v/v))) | 41.5 |
| Comparative Example 1 | GPE: DPHA | 38.3 |
| Comparative Example 2 | GPE: PEO-DMA+ DRIC | 19.7 |
| Comparative Example 3 | GPE: DRIC | 22.5 |

As shown in Table 3, it was confirmed that the lithium batteries of Examples 1 to 5 had improved high-rate characteristics compared to Comparative Examples 1 and 2.

Although embodiments are described above with reference to illustrated drawing, the present disclosure is not limited thereto. It is obvious that one or more suitable alternations and modifications will be apparent to one or ordinary skill in the art to which this application belongs within protection coverage of the present disclosure.

The gel polymer electrolyte according to one or more embodiments may have improved ionic conductivity and physical properties and a lithium battery having improved lifespan and high-rate characteristics may be provided by utilizing the same.

A battery management system (BMS) device, and/or any other relevant devices or components according to embodiments of the present disclosure described herein may be implemented utilizing any suitable hardware, firmware (e.g. an application-specific integrated circuit), software, or a combination of software, firmware, and hardware. For example, the one or more suitable components of the device may be formed on one integrated circuit (IC) chip or on separate IC chips. Further, the one or more suitable components of the device may be implemented on a flexible printed circuit film, a tape carrier package (TCP), a printed circuit board (PCB), or formed on one substrate. Further, the one or more suitable components of the device may be a process or thread, running on one or more processors, in one or more computing devices, executing computer program instructions and interacting with other system components for performing the one or more suitable functionalities described herein. The computer program instructions are stored in a memory which may be implemented in a computing device utilizing a standard memory device, such as, for example, a random access memory (RAM). The computer program instructions may also be stored in other non-transitory computer readable media such as, for example, a CD-ROM, flash drive, and/or the like. Also, a person of skill in the art should recognize that the functionality of one or more suitable computing devices may be combined or integrated into a single computing device, or the functionality of a particular computing device may be distributed across one or more other computing devices without departing from the scope of the present disclosure.

In present disclosure, "not include a or any 'component'" "exclude a or any 'component'", "'component'-free", and/or the like refers to that the "component" not being added, selected or utilized as a component in the composition/structure, but the "component" of less than a suitable amount may still be included due to other impurities and/or external factors.

It should be understood that embodiments described herein should be considered in a descriptive sense only and not for purposes of limitation. Descriptions of features or aspects within each embodiment should typically be considered as available for other similar features or aspects in one or more embodiments. While one or more embodiments have been described with reference to the drawings, it will be understood by those of ordinary skill in the art that one or more suitable changes in form and details may be made therein without departing from the spirit and scope of the present disclosure as defined by the following claims and equivalents thereof.

## Claims

1. A gel polymer electrolyte comprising a gel polymer and a liquid electrolyte,
wherein the liquid electrolyte comprises a lithium salt and an organic solvent,
wherein the gel polymer is a crosslinked product of i) a multifunctional acrylic first polymerizable monomer comprising three or more polymerizable functional groups, and ii) a second polymerizable monomer selected from among urethane-acrylic monomers comprising two or more functional groups, and
wherein the gel polymer electrolyte is for a lithium battery.

2. The gel polymer electrolyte as claimed in claim 1, wherein the first polymerizable monomer is trimethylolpropane triacrylate, trimethylolpropane trimethacrylate, trimethylolpropane ethoxylate triacrylate, trimethylolpropane propoxylate triacrylate, ditrimethylolpropane tetraacrylate, pentaerythritol triacrylate, pentaerythritol tetraacrylate, pentaerythritol ethoxylate tetraacrylate, dipentaerythritol pentaacrylate, dipentaerythritol hexaacrylate (DPHA), or a combination thereof.

3. The gel polymer electrolyte as claimed in claim 1 or 2, wherein the second polymerizable monomer is a compound represented by Formula 1, a compound represented by Formula 2, or a combination thereof: 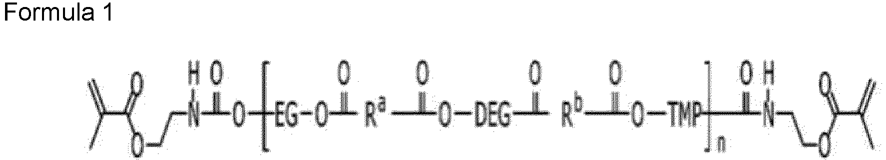
wherein in Formula 1, R^{a} and R^{b} are each independently identical to or different from each other and are each a substituted or unsubstituted C1-C10 alkylene group, EG is an ethylene glycol residue, DEG is a diethylene glycol residue, TMP is a trimethylolpropane residue, and n is an integer from 1 to 100, and 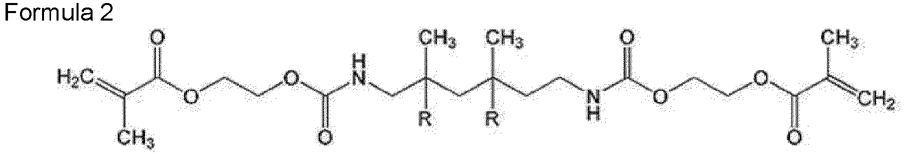
in Formula 2, each R is independently a hydrogen atom, a C1-C3 alkyl group, or a combination thereof; or wherein the second polymerizable monomer is a compound represented by Formula 1, wherein the compound represented by Formula 1 is a compound represented by Formula 3: 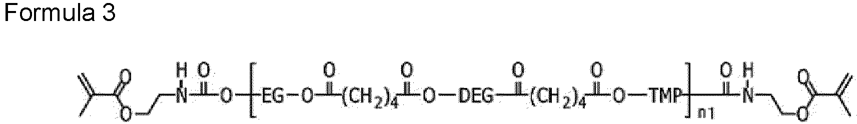
wherein in Formula 3, EG is an ethylene glycol residue, DEG is a diethylene glycol residue, TMP is a trimethylolpropane residue, and n1 is an integer from 1 to 10.

4. The gel polymer electrolyte as claimed in any of claims 1 to 3, wherein a mixing weight ratio of the first polymerizable monomer to the second polymerizable monomer is 10:1 to 1:10.

5. The gel polymer electrolyte as claimed in any of claims 1 to 4, wherein an amount of the gel polymer is 1 part by weight to 10 parts by weight, based on 100 parts by weight of a total weight of the gel polymer electrolyte.

6. The gel polymer electrolyte as claimed in any of claims 1 to 5, wherein the lithium salt comprises a first lithium salt and a second lithium salt, and the first lithium salt and the second lithium salt each independently comprise a fluorine-containing borate-based lithium salt, and
the fluorine-containing borate-based lithium salt comprises LiBF₄, LiBF₃(C₂F₅), one of compounds represented by Formulae 1-1 to 1-12, or a combination thereof. 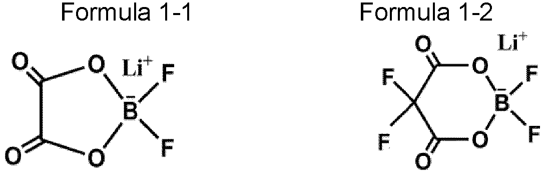 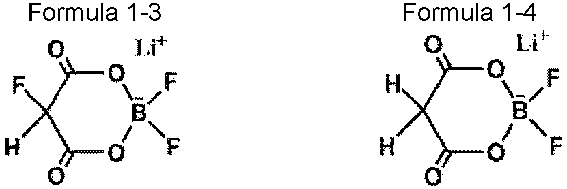 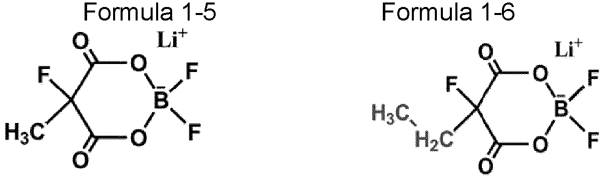 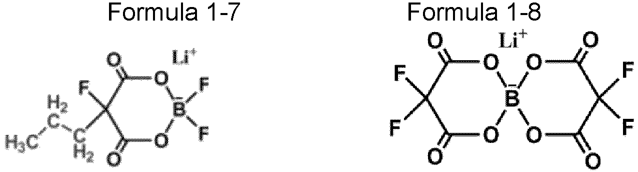 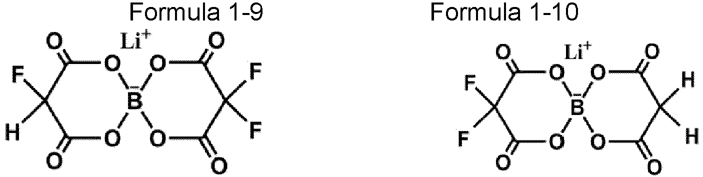 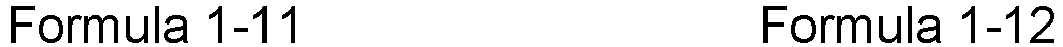 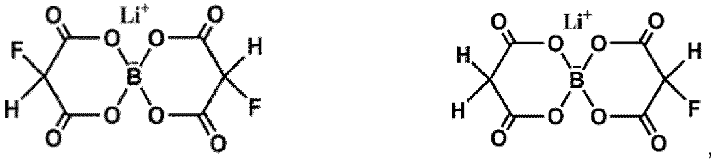 wherein preferably the first lithium salt comprises LiBF₄, and
the second lithium salt comprises a compound selected from among compounds represented by Formulae 1-1 to 1-12, and/or
wherein the amounts of the first lithium salt and the second lithium salt are at most 1.2 M, and a weight ratio of the first lithium salt to the second lithium salt is 1:9 to 9:1.

7. The gel polymer electrolyte as claimed in any of claims 1 to 6, wherein the organic solvent comprises at least one selected from among a carbonate-based compound, an ester-based compound, an ether-based compound, a nitrile-based compound, and a ketone-based compound.

8. The gel polymer electrolyte as claimed in any of claims 1 to 7, wherein the organic solvent comprises a carbonate-based compound,
the carbonate-based compound comprises fluoroethylene carbonate (FEC) and diethyl carbonate (DEC), and
a mixing weight ratio of the FEC to the DEC is 1:10 to 1:1.

9. A lithium battery comprising a positive electrode (12), a negative current collector (21), and an electrolyte layer (30) between the positive electrode (12) and the negative current collector (21),
wherein the electrolyte comprises the gel polymer electrolyte as claimed in any of claims 1 to 8.

10. The lithium battery as claimed in claim 9, further comprising a lithium metal layer (23) between the negative current collector (21) and the electrolyte layer (30),
wherein the lithium metal layer (23) comprises lithium metal foil, lithium metal powder, lithium alloy foil, lithium alloy powder, or a combination thereof, preferably wherein the lithium alloy comprises lithium and a first metal,
wherein the first metal is indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), palladium (Pd), magnesium (Mg), silver (Ag), zinc (Zn), nickel, iron, cobalt, chromium, cesium, sodium, potassium, calcium, yttrium, tantalum, hafnium, barium, vanadium, strontium, lanthanum, or a combination thereof.

11. The lithium battery as claimed in claim 9 or 10, wherein the electrolyte layer (30) comprises a separator, and the separator comprises a porous substrate, wherein preferably the porous substrate is a porous film,
wherein the porous film is woven or non-woven fabric,
the porous substrate comprises olefin resin, fluorine resin, ester resin, imide resin, acrylic resin, cellulose resin, or a combination thereof,
the olefin resin comprises polyethylene, polypropylene, or a combination thereof,
the fluorine resin comprises polyvinylidene fluoride, polytetrafluoroethylene, or a combination thereof,
the ester resin comprises polyethyleneterephthalate, polybutyleneterephthalate, or a combination thereof,
the imide resin comprises polyamideimide, polyetherimide, or a combination thereof,
the acrylic resin comprises polyacrylonitrile, polyacrylate, or a combination thereof, and
the cellulose resin comprises carboxymethylcellulose, microbial cellulose, plant cellulose, animal cellulose, or a combination thereof.

12. The lithium battery (1) as claimed in any of claims 9 to 11, wherein the negative current collector (21) comprises copper (Cu), nickel (Ni), Ni-coated Cu, stainless steel (SUS), iron (Fe), cobalt (Co), or an alloy thereof.

13. The lithium battery (1) as claimed in any of claims 9 to 12, wherein, between the negative current collector (21) and the electrolyte layer (30), the lithium battery (1) further comprises a negative active material layer (22), a protective layer, or a combination thereof.

14. The lithium battery (1) as claimed in any of claims 9 to 13, wherein the gel polymer electrolyte has an ionic conductivity of 0.44 mS/cm or more at 25 °C at 1 atm and has an ionic conductivity of 0.63 mS/cm or more at 45 °C at 1 atm.

15. The lithium battery (1) as claimed in any of claims 9 to 14, wherein the positive electrode (12) comprises a positive current collector (11) and a positive active material layer,
at least one of the positive current collector (11) or the negative current collector (21) comprises a base film and a metal layer on one or both sides of the base film,
wherein the base film comprises a polymer, the polymer comprising polyethyleneterephthalate (PET), polyethylene (PE), polypropylene (PP), polybutyleneterephthalate (PBT), polyimide (PI), or a combination thereof, and
the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.
